# EUROPÄISCHE PATENTSCHRIFT

(11) **EP 3 458 318 B1**
(45) Veröffentlichungstag und Bekanntmachung des Hinweises auf die Patenterteilung: **24.06.2020**
(21) Anmeldenummer: 17713221.4
(22) Anmeldetag: 22.03.2017
(51) Int. Cl.: B60T 8/48

(54) **BREMSSYSTEM FÜR EIN FAHRZEUG UND VERFAHREN ZUM BETREIBEN EINES BREMSSYSTEMS EINES FAHRZEUGS**
BRAKE SYSTEM FOR A VEHICLE AND METHOD FOR OPERATING A BRAKE SYSTEM OF A VEHICLE
SYSTÈME DE FREINAGE CONÇU POUR UN VÉHICULE ET PROCÉDÉ POUR FAIRE FONCTIONNER UN SYSTÈME DE FREINAGE D'UN VÉHICULE

(30) Priorität: 18.05.2016 DE 102016208529
(43) Veröffentlichungstag der Anmeldung: 27.03.2019
(73) Patentinhaber: Robert Bosch GmbH, 70442 Stuttgart (DE)
(72) Erfinder: STRENGERT, Stefan, 70469 Stuttgart (DE); YAO, Xun, 71717 Beilstein (DE); BODMANN, Jochen, 71720 Oberstenfeld (DE); DROTLEFF, Dirk, 71720 Oberstenfeld-Gronau (DE)
(86) Internationale Anmeldenummer: PCT/EP2017/056799
(87) Internationale Veröffentlichungsnummer: WO 2017/198368

(56) Entgegenhaltungen:
- WO-A1-2004/101308
- WO-A2-2013/017314
- DE-A1-102008 001 504
- DE-A1-102012 209 663
- DE-A1-102012 222 978
- US-A1- 2015 232 076

## Beschreibung

Die Erfindung betrifft ein Bremssystem für ein Fahrzeug. Des Weiteren betrifft die Erfindung Verfahren zum Betreiben eines Bremssystems eines Fahrzeugs.

### Stand der Technik

In der DE 10 2012 222 978 A1 sind ein Verfahren zum Betreiben eines Bremssystems eines Fahrzeugs und eine Steuervorrichtung für ein derartiges Bremssystem beschrieben. Das jeweilige Bremssystem hat einen Hauptbremszylinder und zwei Bremskreise mit je einer Speicherkammer und je zwei Radbremszylindern, wobei jedem der Radbremszylinder ein als Schaltventil ausgebildetes Radauslassventil zugeordnet ist. Mittels eines Öffnens mindestens eines der Radauslassventile pro Bremskreis soll trotz einer Betätigung eines an dem Hauptbremszylinder angebundenen Bremspedals durch einen Fahrer des Fahrzeugs eine Bremsdrucksteigerung in dem jeweiligen Bremskreis verhinderbar sein.

Außerdem offenbart die WO 2013/017314 A2 ein Bremssystem für ein Fahrzeug mit einem Hauptbremszylinder, zwei daran angebundenen Bremskreisen mit je einer Speicherkammer, je einem ersten Radbremszylinder und je einem zweiten Radbremszylinder, welche jeweils über ein erstes oder zweites Radauslassventil mit der Speicherkammer verbunden sind, wobei die ersten Radauslassventile jeweils von einem Ventiltyp sind, welcher zusätzlich zu seinem geschlossenen Zustand und einem vollständig offenen Zustand noch in mindestens einen zumindest teiloffenen Zustand steuerbar oder schaltbar ist, und die zweiten je ein 2/2-Schaltventil sind. Das Bremssystem hat auch eine Steuervorrichtung, welche, sofern eine angeforderte Soll-Gesamtbremskraft zumindest teilweise mittels mindestens eines Generators des Fahrzeugs ausführbar ist, dazu ausgelegt ist, zumindest die ersten Radauslassventile jeweils in einen zumindest teiloffenen Zustand zu steuern.

### Offenbarung der Erfindung

Die Erfindung schafft ein Bremssystem für ein Fahrzeug mit den Merkmalen des Anspruchs 1 und ein Verfahren zum Betreiben eines Bremssystems eines Fahrzeugs mit den Merkmalen des Anspruchs 6.

### Vorteile der Erfindung

Wie im Weiteren genauer ausgeführt wird, schafft die Ausbildung mindestens eines der je zwei Radbremszylinder jedes der zwei Bremskreise des erfindungsgemäßen Bremssystems als stetig stellbare Ventile zusätzliche Möglichkeiten zum Begrenzen/Verhindern eines Bremsdruckaufbaus in den Radbremszylindern des Bremssystems während der Betätigung des Bremsbetätigungselements durch den Fahrer. Unter dem jeweiligen stetig stellbaren Ventil wird ein Ventiltyp verstanden, welcher zusätzlich zu seinem geschlossenen Zustand und einem (vollständig) offenen Zustand noch in mindestens einen zumindest teiloffenen Zustand steuerbar/schaltbar ist. Mittels dieses Ventiltyps für zumindest das erste Radauslassventil des ersten Bremskreises und das dritte Radauslassventil des zweiten Bremskreises des erfindungsgemäßen Bremssystems ist eine (von einem mechanischen Leerweg unabhängige) "elektrische Ausbildung" eines Leerwegs an dem erfindungsgemäßen Bremssystem möglich, die sowohl für eine X- als auch für eine parallele Bremskreisaufteilung geeignet ist. Außerdem ist es mittels der "elektrischen Ausbildung" des Leerwegs in allen Verzögerungsbereichen möglich, trotz eines Einbremsens des Fahrers in den Hauptbremszylinder einen Bremsdruckaufbau in den Radbremszylindern des erfindungsgemäßen Bremssystems komplett zu verhindern. Außerdem ermöglicht die vorliegende Erfindung auch einen (kompletten) Bremsdruckabbau in den Radbremszylindern des erfindungsgemäßen Bremssystems während einer Bremsung.

Aufgrund seiner vorteilhaften Eigenschaften eignet sich das erfindungsgemäße Bremssystem besonders gut zum Einsatz in einem Fahrzeug mit mindestens einem Generator zur Rückgewinnung von Bewegungsenergie durch rekuperatives Bremsen. Unter dem rekuperativen Bremsen wird ein Vorgang verstanden, bei welchem mindestens ein Elektromotor als der mindestens eine Generator, welcher auch als mindestens ein elektrischer Antriebsmotor des Fahrzeugs einsetzbar sein kann, generatorisch derart betrieben wird, dass mittels des mindestens einen Elektromotors/Generators ein Bremsmoment bewirkt wird. Eine auf diese Weise gewonnene elektrische Energie kann in einen Speicher zurückgespeist und später, z.B. zum erneuten Beschleunigen des Fahrzeugs, verwendet werden. Das erfindungsgemäße Bremssystem eignet sich deshalb besonders gut zum Einsetzen in einem Hybridfahrzeug oder in einem Elektrofahrzeug. Mittels eines Zusammenwirkens des erfindungsgemäßen Bremssystems mit dem mindestens einen Generator des Fahrzeugs ist ein Energieverbrauch des jeweiligen Fahrzeugs reduzierbar und häufig auch eine Schadstoffemission des jeweiligen Fahrzeugs während seiner Fahrt verringerbar.

Da bei dem erfindungsgemäßen Bremssystem zusätzliche Realisierungsmöglichkeiten zum Begrenzen/Unterdrücken eines Bremsdruckaufbaus in seinen Radbremszylindern während der Betätigung des Bremsbetätigungselements durch den Fahrer geschaffen sind, kann zumindest ein vergleichsweise hoher Anteil der mittels der Betätigung des Bremsbetätigungselements angeforderten Soll-Gesamtbremskraft mittels des rekuperativen Bremsens ausgeführt werden, ohne dass die Soll-Gesamtbremskraft überschritten wird. Das Zusammenwirken des erfindungsgemäßen Bremssystems mit dem mindestens einen Generator führt somit zu einer vergleichsweise hohen rekuperativen Effizienz, insbesondere häufig zu einer rekuperativen Effizienz von 100 %. Die Nachteile eines mechanischen Leerwegs, wie beispielsweise der vergleichsweise hohe konstruktive Aufwand zur Umsetzung des mechanischen Leerwegs in einem herkömmlichen Bremssystem, müssen bei einer Nutzung des erfindungsgemäßen Bremssystems nicht in Kauf genommen werden.

Unter dem jeweiligen 2/2-Schaltventil ist ein Ventiltyp zu verstehen, welcher lediglich in seinen geschlossenen Zustand und in seinen (vollständig) geöffneten Zustand schaltbar ist. Für den zweiten Radbremszylinder und den vierten Radbremszylinder kann somit ein kostengünstiger Ventiltyp verwendet werden, ohne dass dies zu Nachteilen an dem erfindungsgemäßen Bremssystem führt.

Das Bremssystem umfasst eine Steuervorrichtung, welche, sofern eine von einem Fahrer des Fahrzeug mittels seiner Betätigung eines an dem Hauptbremszylinder angebundenen Bremsbetätigungselements angeforderte Soll-Gesamtbremskraft zumindest teilweise mittels mindestens eines Generators des Fahrzeugs ausführbar ist, dazu ausgelegt ist, zumindest das erste Radauslassventil und das dritte Radauslassventil jeweils in einen zumindest teiloffenen Zustand zu steuern, so dass zumindest ein Teil eines mittels der Betätigung des Bremsbetätigungselements aus dem Hauptbremszylinder in den ersten Bremskreis verschobenen Bremsflüssigkeitsvolumens in die erste Speicherkammer und zumindest ein Teil eines mittels der Betätigung des Bremsbetätigungselements aus dem Hauptbremszylinder in den zweiten Bremskreis verschobenen Bremsflüssigkeitsvolumens in die zweite Speicherkammer transferierbar sind. Die auf diese Weise reduzierte/unterbundene Bremswirkung der Radbremszylinder kann zum Umwandeln von Bewegungsenergie in elektrische Energie mittels des mindestens einen Generators genutzt werden, ohne dass die angeforderte Soll-Gesamtbremskraft überschritten wird. Der Fahrer hat deshalb trotz der Energierückgewinnung weiterhin ein standardgemäßes Bremsgefühl.

Insbesondere kann die Steuervorrichtung dazu ausgelegt sein, unter Berücksichtigung eines Bremsbetätigungsstärkesignals bezüglich einer Betätigungsstärke der Betätigung des Bremsbetätigungselements durch den Fahrer zu ermitteln, ob die angeforderte Soll-Gesamtbremskraft zumindest teilweise mittels des mindestens einen Generators ausführbar ist, und, gegebenenfalls, den mindestens einen Generator derart anzusteuern, dass die angeforderte Soll-Gesamtbremskraft zumindest teilweise mittels des mindestens einen Generators ausführbar ist. Mittels dieser Multifunktionalität der Steuervorrichtung kann eine (eigene) Steuerung für den mindestens einen Generator eingespart werden.

Außerdem ist die Steuervorrichtung bei geschlossenem ersten Radauslassventil, geschlossenem zweiten Radauslassventil, geschlossenem dritten Radauslassventil und geschlossenem viertem Radauslassventil dazu ausgelegt, vor einem Steuern zumindest des ersten Radauslassventils und des dritten Radauslassventils jeweils in einen zumindest teiloffenen Zustand mindestens ein Drucksignal bezüglich mindestens eines Drucks in zumindest einem Teilvolumen des Bremssystems mit mindestens einem vorgegebenen Schwellwertsignal zu vergleichen, und, sofern das mindestens eine Drucksignal unter dem mindestens einen Schwellwertsignal liegt, das erste Radauslassventil, das zweite Radauslassventil, das dritte Radauslassventil und das vierte Radauslassventil jeweils in einen zumindest teiloffenen Zustand zu steuern, und andernfalls nur das erste Radauslassventil und das dritte Radauslassventil jeweils in einen zumindest teiloffenen Zustand zu steuern und das zweite Radauslassventil und das vierte Radauslassventil geschlossen zu halten. Während herkömmlicherweise bei einem Vorliegen von hydraulischem Bremsdruck in einem Bremssystem des Stands der Technik ein Druckablassen über die Radauslassventile aus NVH-Gründen (Noise Vibration Harshness) nicht mehr möglich ist, kann mittels der Erfindung selbst bei einem signifikanten Druck in zumindest dem Teilvolumen des Bremssystems eine Bremsdruckreduzierung noch ausgeführt werden. Insbesondere ist selbst bei einem verzögert einsetzenden Generator oder bei einer Steigerung der maximal ausführbaren rekuperativen Bremskraft eine zunehmende Bremswirkung des mindestens einen Generators noch mittels eines Bremsdruckabbaus in den Radbremszylindern verblendbar, ohne dass ein "Plopp-Geräusch" zu befürchten ist.

Bevorzugter Weise ist die Steuervorrichtung auch dazu ausgelegt, solange die angeforderte Soll-Gesamtbremskraft unter einer mittels des mindestens einen Generators maximal ausführbaren rekuperativen Bremskraft liegt, zumindest das erste Radauslassventil und das dritte Radauslassventil jeweils in einen zumindest teiloffenen Zustand zu steuern und den mindestens einen Generator derart anzusteuern, dass die angeforderte Soll-Gesamtbremskraft mittels des mindestens einen Generators ausgeführt wird, und, sobald die angeforderte Soll-Gesamtbremskraft die maximal ausführbare rekuperative Bremskraft übersteigt, das erste Radauslassventil, das zweite Radauslassventil, das dritte Radauslassventil und das vierte Radauslassventil in einen geschlossenen Zustand zu steuern, und, während ein Bremskreis der zwei Bremskreise über sein offenes Umschaltventil an dem Hauptbremszylinder angebunden bleibt, einen anderen Bremskreis der zwei Bremskreise mittels eines Schließens seines Umschaltventils von einem Hauptbremszylinderdruck in dem Hauptbremszylinder abzukoppeln, wobei in den Radbremszylindern des abgekoppelten Bremskreises ein Bremsdruck einstellbar oder aufbaubar ist, welcher einer Abweichung einer Summe einer Generator-Bremskraft des mindestens einen Generators und einer hydraulischen Teilbremskraft der Radbremszylinder des an dem Hauptbremszylinder angebundenen Bremskreises von der angeforderten Soll-Gesamtbremskraft entspricht. Somit kann selbst bei einer die maximal ausführbare rekuperative Bremskraft übersteigenden Soll-Gesamtbremskraft ein vergleichsweise hoher Anteil von dieser noch zur Rückgewinnung von elektrischer Energie genutzt werden, während gleichzeitig mittels eines Bremsdruckaufbaus in den Radbremszylindern des angebundenen Bremskreises und eines (in der Regel verstärkten) Bremsdruckaufbaus in den Radbremszylindern des abgekoppelten Bremskreises die angeforderte Soll-Gesamtbremskraft vollständig ausführbar ist.

Sofern eine mittels des mindestens einen Generators auf eine erste Achse und eine zweite Achse des Fahrzeugs bewirkte Generator-Bremskraftverteilung von einer vorgegebenen Soll-Bremskraftverteilung abweicht, ist die Steuervorrichtung vorzugsweise, sobald die angeforderte Soll-Gesamtbremskraft die maximal ausführbare rekuperative Bremskraft übersteigt, dazu ausgelegt, während der Bremskreis der zwei Bremskreise, welcher einer bei der Generator-Bremskraftverteilung stärker als die Soll-Bremskraftverteilung abgebremsten Achse der zwei Achsen zugeordnet ist, mittels seines offenen Umschaltventils an dem Hauptbremszylinder angebunden bleibt, den anderen Bremskreis der zwei Bremskreise, welcher einer bei der Generator-Bremskraftverteilung weniger als die Soll-Bremskraftverteilung abgebremsten anderen Achse der zwei Achsen zugeordnet ist, mittels seines geschlossenen Umschaltventils von dem Hauptbremszylinderdruck/Druck in dem Hauptbremszylinder abzukoppeln. Der (in der Regel verstärkte) Bremsdruckaufbau in den Radbremszylindern des abgekoppelten Bremskreises kann somit zum Verbessern einer vorliegenden Bremskraftverteilung genutzt werden. Damit kann trotz des Abweichens der Generator-Bremskraftverteilung von der Soll-Bremskraftverteilung ein Überbremsen der einen Achse der zwei Achsen signifikant reduziert werden, indem das Abweichen der Generator-Bremskraftverteilung von der Soll-Bremskraftverteilung durch eine optimiertere Verteilung der Bremsdrücke in den Radbremszylindern kompensiert wird. (Unter der "Abweichung" der Generator-Bremskraftverteilung von der vorgegebenen Soll-Bremskraftverteilung kann auch der Regelfall/Sonderfall verstanden werden, dass der mindestens eine Generator nur auf eine der zwei Achsen wirkt.)

Als vorteilhafte Weiterbildung kann die Steuervorrichtung dazu ausgelegt sein, sobald die maximal ausführbare rekuperative Bremskraft abnimmt, Pumpen so anzusteuern, dass mittels der Pumpen (zusätzliches/von Fahrer verschobenes und abgelassenes) Bremsflüssigkeitsvolumen aus der ersten Speicherkammer und der zweiten Speicherkammer förderbar ist, und mittels eines Schließens oder Geschlossenhaltens nur eines Umschaltventils der Umschaltventile den Bremsdruck in den Radbremszylindern des abgekoppelten Bremskreises so einzustellen, dass er einer Abweichung einer Summe der Generator-Bremskraft und der hydraulische Teilbremskraft der Radbremszylinder des an dem Hauptbremszylinder angebundenen Bremskreises von der angeforderten Soll-Gesamtbremskraft entspricht. Mittels dieses Vorgangs können die Bremsdrücke in den Radbremszylindern auf einen gleichen Zielbremsdruck erhöht werden, wonach eine Ansteuerung der Umschaltventile nicht mehr erforderlich ist. Das Bremssystem kann somit vorteilhaft auf eine Abnahme der maximal ausführbaren rekuperativen Bremskraft reagieren.

Die vorausgehend beschriebenen Vorteile sind auch bei einem Ausführen eines korrespondierenden Verfahrens zum Betreiben eines Bremssystems eines Fahrzeugs realisiert. Es wird darauf hingewiesen, dass das Verfahren zum Betreiben eines Bremssystems eines Fahrzeugs gemäß den oben beschriebenen Ausführungsformen des Bremssystems innerhalb des Rahmens der Verfahrensansprüche 6 bis 10 weiterbildbar ist.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer Ausführungsform des Bremssystems für ein Fahrzeug;
- Fig. 2A bis 2D: schematische Darstellungen von Bremssystemen und Koordinatensysteme zum Erläutern einer ersten Ausführungsform des Verfahrens zum Betreiben eines Bremssystems eines Fahrzeugs; und
- Fig. 3a bis 3e: Koordinatensysteme zum Erläutern einer zweiten Ausführungsform des Verfahrens zum Betreiben eines Bremssystems eines Fahrzeugs.

### Ausführungsformen der Erfindung

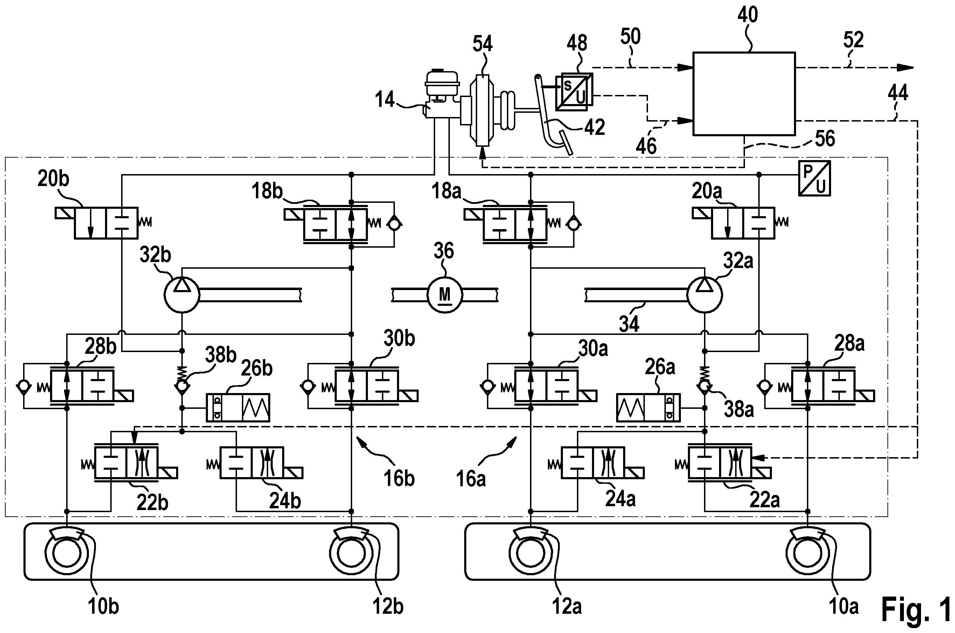

Fig. 1 zeigt eine schematische Darstellung einer Ausführungsform des Bremssystems für ein Fahrzeug.

Das in Fig. 1 schematisch dargestellte Bremssystem wirkt mit mindestens einem Generator zum rekuperativen Bremsen eines Fahrzeugs zusammen. Das Bremssystem der Fig. 1 ist deshalb vorteilhaft in einem Elektrofahrzeug oder in einem Hybridfahrzeug einsetzbar. Es wird jedoch darauf hingewiesen, dass eine Einsetzbarkeit des Bremssystems nicht auf einen bestimmten Fahrzeugtyp/Kraftfahrzeugtyp limitiert ist. Außerdem kann das Bremssystem sowohl in Fahrzeugen mit Frontantrieb, als auch in Fahrzeugen mit Heckantrieb oder in Fahrzeugen mit Allradantrieb eingesetzt werden. Eine Zuteilung von Rädern des jeweiligen Fahrzeugs an Radbremszylinder 10a, 10b, 12a und 12b des Bremssystems der Fig. 1 kann wahlweise eine X-Bremskreisaufteilung oder eine parallele Bremskreisaufteilung (II-Bremskreisaufteilung) sein.

Das Bremssystem hat einen Hauptbremszylinder 14, einen ersten Bremskreis 16a mit einem ersten Radbremszylinder 10a und einem zweiten Radbremszylinder 12a und einen zweiten Bremskreis 16b mit einem dritten Radbremszylinder 10b und einem vierten Radbremszylinder 12b. Beispielhaft sind die Radbremszylinder 10a und 12a des ersten Bremskreises 16a über ein erstes Umschaltventil 18a mit dem Hauptbremszylinder 14 verbunden. Entsprechend können auch die Radbremszylinder 10b und 12b des zweiten Bremskreises 16b über ein zweites Umschaltventil 18b an dem Hauptbremszylinder 14 angebunden sein. Optionaler Weise kann mindestens einer der Bremskreise 16a und 16b noch ein Hochdruckschaltventil 20a und 20b aufweisen, welches parallel zu seinem Umschaltventil 18a oder 18b an dem Hauptbremszylinder 14 angebunden ist.

Der erste Radbremszylinder 10a ist über ein erstes Radauslassventil 22a und der zweite Radbremszylinder 12a ist über ein zweites Radauslassventil 24a mit einer ersten Speicherkammer 26a des ersten Bremskreises 16a verbunden. Entsprechend sind auch der dritte Radbremszylinder 10b über ein drittes Radauslassventil 22b und der vierte Radbremszylinder 12b über ein viertes Radauslassventil 24b mit einer zweiten Speicherkammer 26b des zweiten Bremskreises 16b verbunden. Außerdem sind das erste Radauslassventil 22a und das dritte Radauslassventil 22b je ein stetig stellbares/regelbares Ventil (Druckablassventil). Wie im Weiteren genauer ausgeführt wird, kann die Ausbildung des ersten Radbremszylinders 22a und des dritten Radbremszylinders 22b als je ein stetig stellbares Ventil für eine Vielzahl von vorteilhaften Prozessen zum Reduzieren oder Verhindern eines Bremsdruckaufbaus in den Radbremszylindern 10a, 10b, 12a und 12b des Bremssystems trotz einer Steigerung eines Hauptbremszylinderdrucks in dem Hauptbremszylinder 14 genutzt werden.

Vorzugsweise sind der zweite Radbremszylinder 24a und der vierte Radbremszylinder 24b je ein Schaltventil. Somit kann ein kostengünstiger Ventiltyp für den zweiten Radbremszylinder 24a und den vierten Radbremszylinder 24b genutzt werden.

Optionalerweise können die Radbremszylinder 10a und 12a oder 10b und 12b mindestens eines der Bremskreise 16a und 16b über mindestens ein Radeinlassventil 28a, 28b, 30a und 30b mit dem Umschaltventil 18a oder 18b ihres Bremskreises 16a oder 16b und/oder mit dem Hauptbremszylinder 14 verbunden sein. Insbesondere kann jedem Radbremszylinder 10a, 10b, 12a und 12b je ein Radeinlassventil 28a, 28b, 30a und 30b zugeordnet sein. Auf eine Ausstattung des hier beschriebenen Bremssystems mit vier Radeinlassventilen 28a, 28b, 30a und 30b kann jedoch auch verzichtet werden, ausreichend sind in der Regel auch zwei Radeinlassventile 28a, 28b, 30a und 30b.

In der Ausführungsform der Fig. 1 ist jeder der Bremskreise 16a und 16b auch mit je einer Pumpe 32a oder 32b ausgestattet. Eine Saugseite der ersten Pumpe 32a des ersten Bremskreises 16a ist (vorzugsweise über ein erstes Rückschlagventil 38a) mit der ersten Speicherkammer 26a verbunden, während eine Förderseite der ersten Pumpe 32a mit dem ersten Umschaltventil 18a und mit dem mindestens einen Radeinlassventil 28a und 30a des ersten Bremskreises 16 und/oder mit dem ersten Radbremszylinder 10a und dem zweiten Radbremszylinder 12a verbunden ist. Auch für die zweite Pumpe 32b des zweiten Bremskreises 16b wird es bevorzugt, wenn deren Saugseite (z.B. über ein zweites Rückschlagventil 38b) mit der zweiten Speicherkammer 26b und deren Förderseite mit dem zweiten Umschaltventil 18b und dem mindestens einen Radeinlassventil 28b und 30b des zweiten Bremskreises 16b und/oder dem dritten Radbremszylinder 10b und dem vierten Radbremszylinder 12b verbunden ist. Vorzugsweise sind die Pumpen 32a und 32b beider Bremskreise 16a und 16b mittels einer gemeinsamen Welle 34 eines Pumpenmotors 36 betreibbar. Alternativ kann jedoch auch auf die Ausstattung mindestens eines der Bremskreise 16a und 16b mit einer Pumpe 32a oder 32b verzichtet werden.

In der Ausführungsform der Fig. 1 hat das Bremssystem auch eine Steuervorrichtung 40, welche, sofern eine von einem Fahrer des Fahrzeugs mittels seiner Betätigung eines an dem Hauptbremszylinder 14 angebundenen Bremsbetätigungselements 42 angeforderte Soll-Gesamtbremskraft zumindest teilweise mittels mindestens des einen (nicht dargestellten) Generators des Fahrzeugs ausführbar ist, dazu ausgelegt ist, zumindest das erste Radauslassventil 10a und das dritte Radauslassventil 10b jeweils in einen zumindest teiloffenen Zustand zu steuern. (Eine erfindungsgemäßen Vorgehensweise zum Festlegen der Anzahl der geöffneten Radauslassventile wird unten noch beschrieben.) Dies kann beispielsweise mittels eines Ausgebens mindestens eines Öffnungssignals 44 zumindest an das erste Radauslassventil 10a und an das dritte Radauslassventil 10b geschehen. Insbesondere kann die Ausgabe des mindestens einen Öffnungssignals 44 ein Bestromen zumindest der (als je ein stromlos geschlossenes Ventil ausgebildeten) Radauslassventile 10a und 10b sein. Auf diese Weise ist bewirkbar, dass zumindest ein Teil eines mittels der Betätigung des Bremsbetätigungselements 42 aus dem Hauptbremszylinder 14 in den ersten Bremskreis 16a verschobenen Bremsflüssigkeitsvolumens in die erste Speicherkammer 26a transferiert wird. Entsprechend ist auch gewährleistet, dass zumindest ein Teil eines mittels der Betätigung des Bremsbetätigungselements 42 aus dem Hauptbremszylinder 14 in dem zweiten Bremskreis 16b verschobenen Bremsflüssigkeitsvolumens in die zweite Speicherkammer 26b transferierbar ist/transferiert wird. Eine auf diese Weise reduzierte/entfallende Bremswirkung der Radbremszylinder 10a, 10b, 12a und 12b des Bremssystems kann zum rekuperativen Bremsen des damit ausgestatteten Fahrzeugs mit dem mindestens einen Generator genutzt werden, ohne dass die vorgegebene Soll-Gesamtbremskraft überschritten wird.

Stattdessen entspricht eine aktuell ausgeführte Verzögerung des Fahrzeugs der von seinem Fahrer mittels seiner Betätigung des Bremsbetätigungselements 42 angeforderten Soll-Gesamtbremskraft. Der Fahrer hat somit trotz des ausgeführten rekuperativen Bremsens ein standardgemäßes Bremsgefühl.

Beispielsweise ist die Steuervorrichtung 40 dazu ausgelegt ist, unter Berücksichtigung eines Bremsbetätigungsstärkesignals 46 (eines Sensors 48) bezüglich einer Betätigungsstärke der Betätigung des Bremsbetätigungselements 42 durch den Fahrer zu ermitteln, ob die angeforderte Soll-Gesamtbremskraft erfindungsgemäß zumindest teilweise mittels des mindestens einen Generators ausführbar ist. Dazu kann auch eine Information 50 bezüglich einer mittels des mindestens einen Generators maximal ausführbaren rekuperativen Bremskraft an die Steuervorrichtung 40 bereitgestellt sein.

Gegebenenfalls, kann die Steuervorrichtung 40 dazu ausgelegt sein, den mindestens einen Generator mittels eines Generator-Steuersignals 52 derart anzusteuern, dass die angeforderte Soll-Gesamtbremskraft zumindest teilweise mittels des mindestens einen Generators ausführbar ist. Auch ein (zwischen dem Bremsbetätigungselement 42 und dem Hauptbremszylinder 14 angeordneter) Bremskraftverstärker 54 (z.B. ein elektromechanischer Bremskraftverstärker/iBooster) kann mittels eines Bremskraftverstärker-Steuersignals 56 der Steuervorrichtung 40 auf die unten genauer beschriebene Weise ansteuerbar sein.

Die Steuervorrichtung 40 kann insbesondere dazu ausgelegt sein, die im Weiteren beschriebenen Verfahren auszuführen.

Fig. 2A bis 2D zeigen schematische Darstellungen von Bremssystemen und Koordinatensysteme zum Erläutern einer ersten Ausführungsform des Verfahrens zum Betreiben eines Bremssystems eines Fahrzeugs.

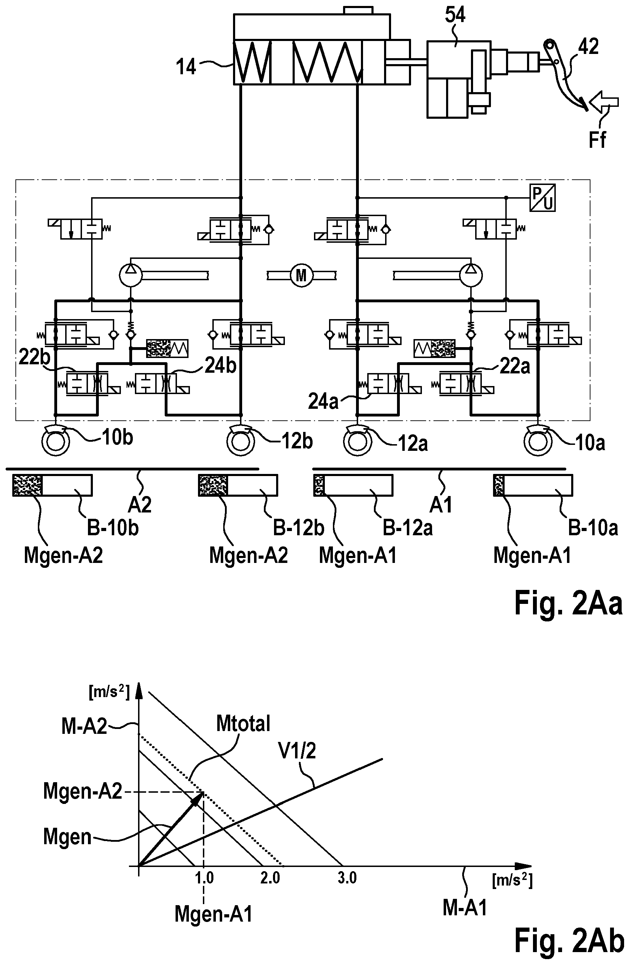

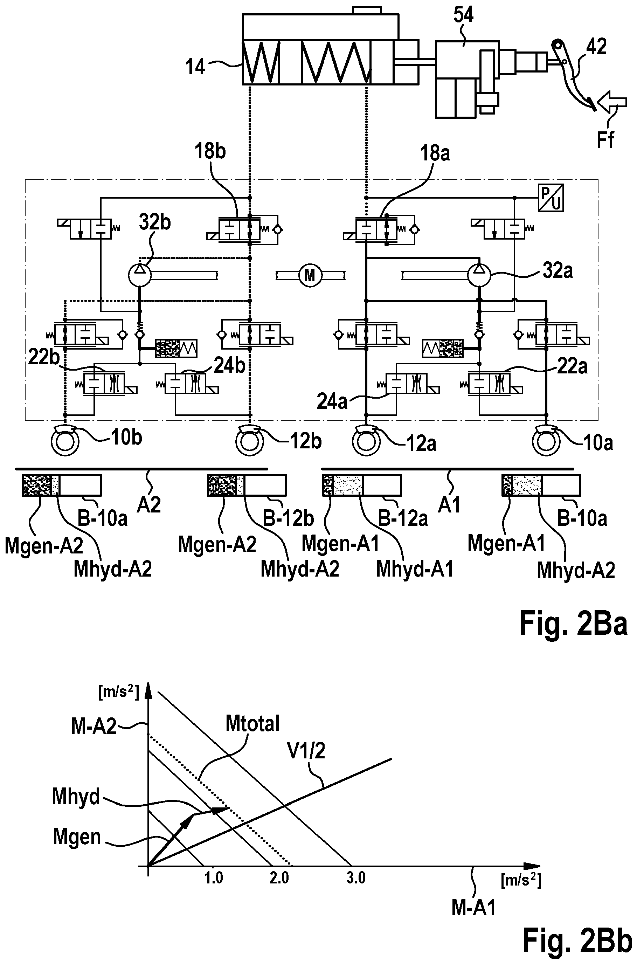

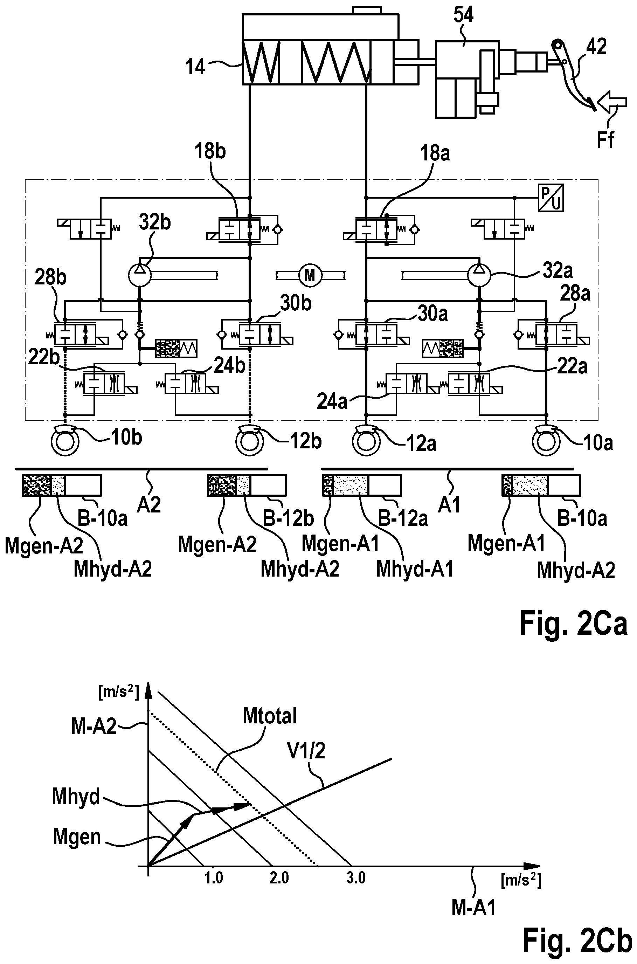

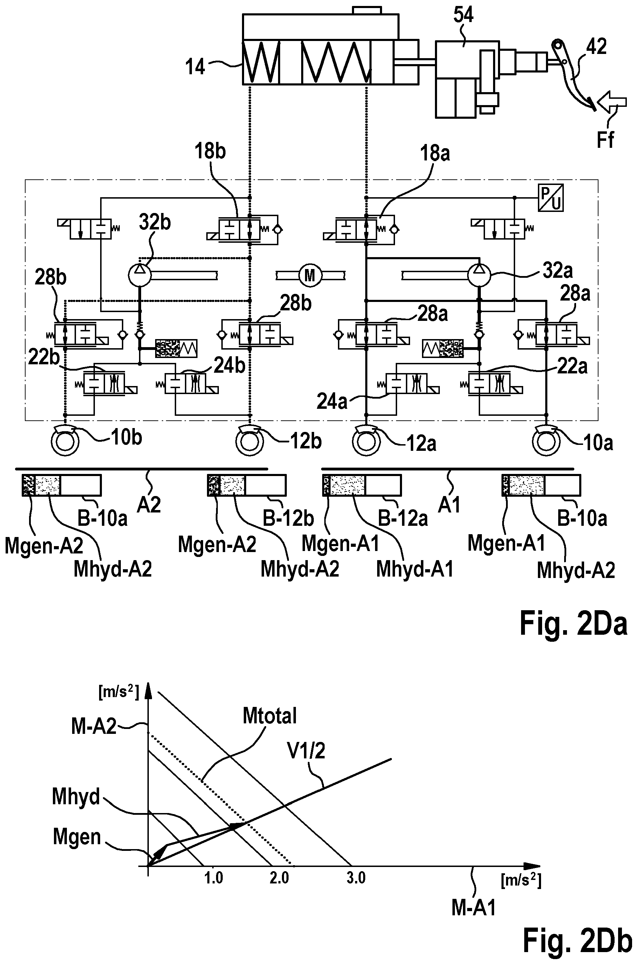

Bei dem im Weiteren beschriebenen Verfahren wird das Bremssystem der Fig. 1 verwendet (siehe Fig. 2Aa, 2Ba, 2Ca und 2Da). Beispielhaft sind die Radbremszylinder 10a und 12a des ersten Bremskreises 16a einer ersten Achse A1 und die Radbremszylinder 10b und 12b des zweiten Bremskreises 16b einer zweiten Achse A2 zugeordnet. Die erste Achse A1 kann z.B. eine Vorderachse sein, während die zweite Achse A2 eine Hinterachse ist. In die Fig. 2Aa, 2Ba, 2Ca und 2Da eingezeichnete Balken B-10a und B-12a geben die mittels der Radbremszylinder 10a und 12a des ersten Bremskreises 16a auf die erste Achse A1 ausgeübten Bremsmomente wieder. Entsprechend sind in den Fig. 2Aa, 2Ba, 2Ca und 2Da die mittels der Radbremszylinder 10b und 12b des zweiten Bremskreises 16b auf die zweite Achse A2 ausgeübten Bremsmomente mittels Balken B-10b und B-12b angezeigt. Ein insgesamt auf die erste Achse A1 ausgeübtes erstes Achs-Teilbremsmoment M-A1 (in Meter/Sekunde²) ist mittels einer Abszisse der Koordinatensysteme der Fig. 2Ab, 2Bb, 2Cb und 2Db dargestellt, während eine Ordinate der Koordinatensysteme der Fig. 2Ab, 2Bb, 2Cb und 2Db ein insgesamt auf die zweite Achse A2 ausgeübtes zweites Achs-Teilbremsmoment M-A2 (in Meter/Sekunde²) wiedergibt.

Beim Ausführen des Verfahrens wird bei einer Betätigung eines an dem Hauptbremszylinder 14 angebundenen Bremsbetätigungselements 42 durch den Fahrer des Fahrzeugs ermittelt, ob eine von dem Fahrer mittels der Betätigung des Bremsbetätigungselements 42 angeforderte Soll-Gesamtbremskraft (bzw. ein entsprechend angefordertes Soll-Gesamtbremsmoment Mtotal) zumindest teilweise mittels mindestens des einen (nicht dargestellten) Generators des Fahrzeugs ausführbar ist. Ist die angeforderte Soll-Gesamtbremskraft zumindest teilweise mittels des mindestens einen Generators ausführbar, so wird der mindestens eine Generator derart angesteuert/aktiviert, dass die angeforderte Soll-Gesamtbremskraft zumindest teilweise mittels einer Generator-Bremskraft (bzw. mittels eines Generator-Bremsmoments Mgen) des mindestens einen Generators ausgeführt wird. (Die in die Balken B-10a, B-10b, B-12a und B-12b der Fig. 2Aa eingezeichneten Bereiche zeigen ein mittels des mindestens einen Generators auf die erste Achse A1 ausgeübtes erstes Generator-Teilbremsmoment Mgen-Al oder ein mittels des mindestens einen Generators auf die zweite Achse A2 ausgeübtes zweites Generator-Teilbremsmoment Mgen-A2 an.)

Sofern die angeforderte Soll-Gesamtbremskraft zumindest teilweise mittels des mindestens einen Generators ausgeführt wird, wird zum Transferieren zumindest eines Teils eines mittels der Betätigung des Bremsbetätigungselements 42 aus dem Hauptbremszylinder 14 in den ersten Bremskreis 16a verschobenen Bremsflüssigkeitsvolumens in die erste Speicherkammer 26a zumindest das erste Radauslassventil 22a des ersten Bremskreises 16a geöffnet. Entsprechend erfolgt auch ein Öffnen zumindest des dritten Radauslassventils 22b des zweiten Bremskreises 16b zum Transferieren zumindest eines Teils eines mittels der Betätigung des Bremsbetätigungselements 42 aus dem Hauptbremszylinder 14 in den zweiten Bremskreis 16b verschobenen Bremsflüssigkeitsvolumens in die zweite Speicherkammer 26b. Aus NVH-Gründen (Noise Vibration Harshness) ist häufig nur ein Öffnen von lediglich dem ersten Radauslassventil 22a und dem dritten Radauslassventil 22b vorteilhaft. Sofern ein schnelles Transferieren von Bremsflüssigkeit erwünscht ist, können auch alle Radauslassventile 22a, 22b, 24a und 24b geöffnet werden. (Eine vorteilhafte Vorgehensweise zum Festlegen der Anzahl der geöffneten Radauslassventile wird unten noch beschrieben.)

Würde während der Betätigung des Bremsbetätigungselements 42 keine Verschiebung von Bremsflüssigkeitsvolumen in die Speicherkammern 26a und 26b erfolgen, so würde die Betätigung des Bremsbetätigungselements 42 einen Druckaufbau in dem Bremssystem und damit eine Druck-Gegenkraft bewirken, welche der Fahrer mittels seiner Fahrerbremskraft Ff für ein weiteres Verstellen des Bremsbetätigungselements 42 überwinden müsste. Da bei dem Verfahrensstand der Fig. 2Aa und 2Ab das von dem Fahrer aus dem Hauptbremszylinder 14 verschobene Bremsflüssigkeitsvolumen zumindest teilweise in die Speicherkammern 26a und 26b abgelassen wird, und die Druck-Gegenkraft deshalb reduziert wird oder wegfällt, wird vorzugsweise die reduzierte oder wegfallende Druck-Gegenkraft zumindest teilweise mittels einer Reduzierung einer (die Betätigung des Bremsbetätigungselements 42 durch den Fahrer kraftmäßig unterstützenden) Verstärkungskraft eines Bremskraftverstärkers 54 oder mittels einer (der Betätigung des Bremsbetätigungselements 42 durch den Fahrer entgegenwirkenden) Gegenkraft des Bremskraftverstärkers 54 kompensiert. Der Fahrer hat somit trotz des Ablassens von Bremsflüssigkeit in die Speicherkammern 26a und 26b noch ein standardgemäßes Bremsbetätigungsgefühl (Pedalgefühl). Das hier beschriebene Verfahren kann auch an einem Bremssystem mit einem Vakuumbremskraftverstärker ausgeführt werden, wobei das Verfahren in diesem Fall vorzugsweise nur unterhalb des Jump-In-Bereichs (bzw. eines bestimmten Druckbereichs) angewendet wird.

Bei dem mittels der Fig. 2A bis 2D erläuterten Verfahren wird, solange die angeforderte Soll-Gesamtbremskraft (bzw. das angeforderte Soll-Gesamtbremsmoment Mtotal) unter einer mittels des mindestens einen Generators maximal ausführbaren rekuperativen Bremskraft (bzw. einem entsprechenden maximal ausführbaren rekuperativen Bremsmoment Mgen0) liegt, der mindestens eine Generator derart angesteuert/betrieben, dass die angeforderte Soll-Gesamtbremskraft (zu nahezu 100 %) mittels der Generator-Bremskraft (bzw. des Generator-Bremsmoments Mgen) des mindestens einen Generators ausgeführt wird. (Dies ist in dem mittels der Fig. 2Aa und 2Ba dargestellten Verfahrensstand der Fall.) Auch in diesem Fall ist ein Aufbau von hydraulischen Drücken in allen Radbremszylindern 10a, 10b, 12a und 12b des Bremssystems verlässlich verhinderbar/verhindert, indem das aus dem Hauptbremszylinder 14 verschobene Bremsflüssigkeitsvolumen über zumindest das erste Radauslassventil 22a und das dritte Radauslassventil 22b in die Speicherkammern 26a und 26b abgelassen wird. Vorzugsweise wird die entfallende Gegenkraft mittels des Bremskraftverstärkers 54 so simuliert, dass die vom Fahrer zum Verstellen des Bremsbetätigungselements 42 aufzubringende Fahrerbremskraft Ff weiterhin einer standardgemäßen Kennlinie entspricht.

In dem Koordinatensystem der Fig. 2Ab ist erkennbar, dass eine mittels des mindestens einen Generators bewirkte Generator-Bremskraftverteilung oder Generator-Bremsmomentverteilung (d.h. ein Verhältnis zwischen dem ersten Generator-Teilbremsmoment Mgen-Al und dem zweiten Generator-Teilbremsmoment Mgen-A2) von einer vorgegebenen Soll-Bremskraftverteilung, bzw. einer vorgegebenen Soll-Bremsmomentverteilung V1/2 abweicht. Beispielsweise ist das Fahrzeug ein Allradfahrzeug mit einer mittels des mindestens einen Generators realisierten hecklastigen (Antriebs-) Momentverteilung.

Sobald die angeforderte Soll-Gesamtbremskraft die maximal ausführbare rekuperative Bremskraft übersteigt, werden das erste Radauslassventil 22a, das zweite Radauslassventil 24a, das dritte Radauslassventil 22b und das vierte Radauslassventil 24b in einem geschlossenen Zustand gesteuert. (Dies ist in einem mittels der Fig. 2Ba und 2Bb dargestellten Verfahrensstand der Fall.) Außerdem wird ein Bremsdruckaufbau in allen Radbremszylindern 10a, 10b, 12a und 12b eingeleitet, so dass mittels einer ersten hydraulischen Teilbremskraft (bzw. eines ersten hydraulischen Teilbremsmoments Mhyd-A1) der Radbremszylinder 10a und 12a des ersten Bremskreises 16a auf die erste Achse A1 und einer zweiten hydraulischen Teilbremskraft (bzw. eines zweiten hydraulischen Teilbremsmoments Mhyd-A2) der Radbremszylinder 10b und 12b des zweiten Bremskreises 16b auf die zweite Achse A2, welche zusammen eine hydraulische Bremskraft (bzw. ein entsprechendes hydraulisches Bremsmoment Mhyd) ergeben, die angeforderte Soll-Gesamtbremskraft (bzw. das angeforderte Soll-Gesamtbremsmoment Mtotal) trotz einer Generator-Bremskraft von höchstens der maximal ausführbaren rekuperativen Bremskraft (bzw. eines Generator-Bremsmoments Mgen von höchstens dem maximal ausführbaren rekuperativen Bremsmoment Mgen0) weiterhin eingehalten wird.

Dazu wird auch die Fahrerbremskraft Ff genutzt. Ein Bremskreis 16b der zwei Bremskreise 16a und 16b bleibt über sein offenes Umschaltventil 18b an dem Hauptbremszylinder 14 angebunden. Ein Bremsdruck in den Radbremszylindern 10b und 12b des an dem Hauptbremszylinder 14 angebundenen Bremskreises 16b entspricht somit einem Hauptbremszylinderdruck in dem Hauptbremszylinder 14. Außerdem wird ein anderer Bremskreis 16a der zwei Bremskreise 16a und 16b mittels eines Schließens seines Umschaltventils 18a von dem Hauptbremszylinder 14 abgekoppelt, wobei in den Radbremszylindern 10a und 12a des abgekoppelten Bremskreises 16a ein Bremsdruck eingestellt ("eingeschlossen") oder aufgebaut wird, welcher einer Abweichung einer Summe der Generator-Bremskraft und der hydraulische Teilbremskraft der Radbremszylinder 10b und 12b des an dem Hauptbremszylinder 14 angebundenen Bremskreises 16b von der angeforderten Soll-Gesamtbremskraft (bzw. einer Abweichung einer Summe des Generator-Bremsmoments Mgen und des hydraulischen Teilbremsmoments Mhyd-A2 der Radbremszylinder 10b und 12b des an dem Hauptbremszylinder 14 angebundenen Bremskreises 16b von dem angeforderten Soll-Gesamtbremsmoment Mtotal) entspricht. (Der Bremsdruck in den Radbremszylindern 10a und 12a des abgekoppelten Bremskreises 16a wird somit so eingestellt, dass er ein hydraulisches Teilbremsmoment Mhyd-A1 der Radbremszylinder 10a und 12a des abgekoppelten Bremskreises 16a (nahezu) gleich der Abweichung der Summe des Generator-Bremsmoments Mgen und des hydraulischen Teilbremsmoments Mhyd-A2 der Radbremszylinder 10b und 12b des an dem Hauptbremszylinder 14 angebundenen Bremskreises 16b von dem angeforderten Soll-Gesamtbremsmoment Mtotal bewirkt.) In der bildlich wiedergegebenen Situation bleibt die Fahrerbremskraft Ff konstant (es besteht ein konstanter Fahrerbremswunsch). Damit ist die Fahrerbremskraft Ff (fast) immer ausreichend um den gewünschten hydraulischen Zieldruck zu bewirken.

Reicht die Fahrerbremskraft Ff zum Bewirken der angeforderten Soll-Gesamtbremskraft nicht aus, so werden die Pumpen 32a und 32b dazu angesteuert, Bremsflüssigkeit aus der jeweils zugeordneten Speicherkammer 26a und 26b zu pumpen. (Einzig wenn der Fahrer seinen Bremswunsch erhöht und damit Volumen in das Bremssystem einbringt, kann dieses zum Aufbringen der hydraulischen Bremskraftsteigerung verwendet werden. Ansonsten müssen die Pumpen 32a und 32b so angesteuert werden, dass das vorher abgelassene Volumen in den Speicherkammern 26a und 26b einen hydraulischen Bremsdruckaufbau erzeugt. Zum hydraulischen Bremsdruckaufbau wird mittels der Pumpen 32a und 32b Volumen aus den Speicherkammern 26a und 26b in die Radbremszylinder 10a und 12a geschoben.) Die Pumpe 32a des abgekoppelten Bremskreises 16a fördert direkt in die zugeordneten Radbremszylinder 10a und 12a, während die Pumpe 32b des an dem Hauptbremszylinder 14 angebundenen Bremskreises 16b auch in den Hauptbremszylinder 14 fördert, und damit zur Steigerung des Hauptbremszylinderdrucks beiträgt. (Beide Pumpen 32a und 32b liefern aufgrund ihrer mechanischer Kopplung über den Pumpenmotor 36 das gleiche Bremsflüssigkeitsvolumen aus den ihnen zugeordneten Speicherkammern 26a und 26b. Über einen in dem Hauptbremszylinder 14 verbauten Schwimmkolben erfolgt jedoch ein Ausgleich des unterschiedlichen Volumenbedarfs der beiden Bremskreise 16a und 16b.)

Außerdem kann mittels des Bremskraftverstärkers 54 dafür gesorgt werden, dass der Fahrer die Bremsflüssigkeitförderung aus den Speicherkammern 26a und 26b nicht spürt. Entsprechend kann auch bei einem Vakuumbremskraftverstärker durch Limitierung der Verfahrensausführung auf den Jump-In-Bereich dafür gesorgt werden, dass der Fahrer die Bremsflüssigkeitsförderung aus den Speicherkammern 26a und 26b nicht spürt.

Somit kann trotz des Übersteigens der maximal ausführbaren rekuperativen Bremskraft durch die angeforderte Soll-Gesamtbremskraft der Fahrerbremswunsch weiterhin verlässlich ausgeführt werden. Zusätzlich kann weiterhin ein vergleichsweise großer Anteil der Soll-Gesamtbremskraft mittels des rekuperativen Bremsens durch den mindestens einen Generator ausgeführt werden, so dass weiterhin relativ viel kinetische Energie des Fahrzeugs in abspeicherbare elektrische Energie umgewandelt wird. Da bei der hier beschriebenen Vorgehensweise der Fahrer jederzeit in beide Bremskreise 16a und 16b einbremsen kann, wird eine hydraulische Last der Pumpen 232a und 32b und des Pumpenmotors 36 (insbesondere gegenüber einem Brake-by-Wire- oder einem Einachs-Brake-by-Wire-Bremssystem) deutlich reduziert.

Vorzugsweise bleibt bei der hier beschriebenen Vorgehensweise der Bremskreis 16b der zwei Bremskreise 16a und 16b, welcher einer Achse A2 der zwei Achsen A1 und A2 zugeordnet ist, die bei der Generator-Bremskraftverteilung stärker als die Soll-Bremskraftverteilung abgebremst wird (bzw. bei der Generator-Bremsmomentverteilung stärker als die Soll-Bremsmomentverteilung V1/2 abgebremst wird), an dem Hauptbremszylinder 14 angebunden. Demgegenüber wird der andere Bremskreis 16a der zwei Bremskreise 16a und 16b, welcher einer anderen Achse A1 der zwei Achsen A1 und A2 des Fahrzeugs zugeordnet ist, die bei der Generator-Bremskraftverteilung weniger als die Soll-Bremskraftverteilung abgebremst wird (bzw. bei der Generator-Bremsmomentverteilung weniger als die Soll- Bremsmomentverteilung V1/2 abgebremst wird), mittels seines geschlossenen Umschaltventils 18a von dem Hauptbremszylinder 14 abgekoppelt. Da bis zum Überschreiten der maximal ausführbaren rekuperativen Bremskraft durch die angeforderte Soll-Gesamtbremskraft vergleichsweise viel Bremsflüssigkeit in die Speicherkammern 26a und 26b verschoben wird, ist der Hauptbremszylinderdruck im Vergleich mit der angeforderten Soll-Gesamtbremskraft vergleichsweise niedrig. In der Regel wird ein höherer Bremsdruck in den Radbremszylindern 10a und 12a des abgekoppelten Bremskreises 16a aufgebaut als der in den Radbremszylindern 10b und 12b des angebundenen Bremskreises 16b bewirkte Bremsdruck. Mittels des Aufbaus des höheren Bremsdrucks in den Radbremszylindern 10a und 12a des abgekoppelten Bremskreises 16a, welcher der bei der Generator-Bremskraftverteilung weniger als die Soll-Bremskraftverteilung abgebremsten Achse A1 zugeordnet ist, kann eine verbesserte Bremskraftverteilung bewirkt werden.

Fig. 2Ca und 2Cb zeigen eine Ansteuerstrategie für eine Situation, in welcher der Fahrer nach/bei dem Verfahrensstand der Fig. 2Ba und 2Bb nachbremst (Nachbremserkennung). (Die gleiche Ansteuerstrategie kann auch eingesetzt werden, wenn der Fahrer seinen Bremswunsch während eines achsweisen Verblendens erhöht.) Mit dieser Ansteuerstrategie soll sichergestellt werden, dass das vom Fahrer zusätzlich eingebrachte Volumen trotz des vorliegenden Druckunterschieds zwischen dem an dem Hauptbremszylinder 14 angebundenen Bremskreis 16b und dem abgekoppelten Bremskreis 16a auf beide Bremskreise 16a und 16b verteilt wird, und damit auch an beiden Achsen A1 und A2 zu einer Bremskraftsteigerung führt.

Gleichzeitig soll mittels der Ansteuerstrategie sichergestellt werden, dass weiterhin ein Druckunterschied zwischen beiden Bremskreisen 16a und 16b vorliegt. Der zuvor von dem Hauptbremszylinder 14 abgekoppelte Bremskreis 16a wird durch Öffnen seines Umschaltventils 18a wieder an dem Hauptbremszylinder 14 angebunden, so dass der Bremsdruck in seinen Radbremszylindern 10a und 12a dem Hauptbremszylinderdruck entspricht. Mittels der Radeinlassventile 28b und 30b des anderen Bremskreises 16b kann der Bremsdruck in seinen Radbremszylindern 10b und 12b (abweichend von dem Hauptbremszylinderdruck) so (niedriger) eingestellt werden, dass der Bremsdruck in den mittels der geschlossenen Radeinlassventile 28b und 30b von dem Hauptbremszylinder 14 abgekoppelten Radbremszylindern 10b und 12b einer Abweichung einer Summe der Generator-Bremskraft und der hydraulische Teilbremskraft der an dem Hauptbremszylinder 14 angebundenen Radbremszylinder 10a und 12a von der angeforderten Soll-Gesamtbremskraft (bzw. einer Abweichung einer Summe des Generator-Bremsmoments Mgen und des hydraulischen Teilbremsmoments Mhyd-A1 der an dem Hauptbremszylinder 14 angebundenen Radbremszylinder 10a und 12a von dem angeforderten Soll-Gesamtbremsmoment Mtotal) entspricht.

Mittels eines Betriebs beider Pumpen 32a und 32b kann zusätzliches Volumen aus den beiden Speicherkammern 26a und 26b gefördert werden. Alternativ kann auch Bremsflüssigkeit über mindestens ein Radauslassventil 10a in mindestens eine der Speicherkammern 26a und 26b verschoben werden. Der Betrieb des Bremskraftverstärkers 54 kann entsprechend angepasst werden.

Fig. 2Da und 2Db zeigen eine weitere (bei dem Verfahrensstand der Fig. 2Ba und 2Bb oder bei dem Verfahrensstand der Fig. 2Ca und 2Cb ausführbare) Ansteuerstrategie, welche bei einer Abnahme der mittels des mindestens einen Generators maximal ausführbaren rekuperativen Bremskraft (bzw. des maximal ausführbaren rekuperativen Mgen0) vorteilhaft ist. (Insbesondere wenn das Fahrzeug in den Stillstand kommt, nimmt die maximal ausführbare rekuperative Bremskraft stark ab.) Allerdings kann die Abnahme der maximal ausführbaren rekuperativen Bremskraft durch eine Steigerung der Bremsdrücke in den Radbremszylindern 10a, 10b, 12a und 12b kompensiert/ersetzt werden. Dies erfolgt, indem nur eines der beiden Umschaltventile 18a und 18b in einen offenen Zustand gesteuert/gehalten wird, während die Pumpen 32a und 32b so angesteuert werden, dass die Pumpen 32a und 32b zusätzliches Bremsflüssigkeitsvolumen aus den ihnen zugeordneten Speicherkammern 26a und 26b fördern. Mittels des Schließens/Geschlossenhaltens des Umschaltventils 18a des abgekoppelten Bremskreises 16a wird der Bremsdruck in den Radbremszylindern 10a und 12a des abgekoppelten Bremskreises 16a so eingestellt, dass er einer Abweichung einer Summe der Generator-Bremskraft und der hydraulische Teilbremskraft der Radbremszylinder 10b und 12b des an dem Hauptbremszylinder 14 angebundenen Bremskreises 16b von der angeforderten Soll-Gesamtbremskraft (bzw. einer Abweichung einer Summe des Generator-Bremsmoments Mgen und des hydraulischen Teilbremsmoments Mhyd-A2 der Radbremszylinder 10b und 12b des an dem Hauptbremszylinder 14 angebundenen Bremskreises 16b von dem angeforderten Soll-Gesamtbremsmoment Mtotal) entspricht. (Der Bremsdruck in den Radbremszylindern 10b und 12b des an dem Hauptbremszylinder 14 angebundenen Bremskreises 16b ist gleich dem Hauptbremszylinderdruck.) Während dieser Ansteuerstrategie nimmt ein Druckunterschieds zwischen dem Bremsdruck in den Radbremszylindern 10a und 12a des abgekoppelten Bremskreises 16a und dem Bremsdruck in den Radbremszylindern 10b und 12b des an dem Hauptbremszylinder 14 angebundenen Bremskreises 16b ab. Der Schwimmkolben bewegt sich deshalb während dieses Ansteuerstrategie, bis er sich bei Wegfall der Generator-Bremskraft wieder in seiner ursprünglichen Betätigungsposition/Ausgangsposition befindet. Sobald in allen Radbremszylindern 10a, 10b, 12a und 12b der gleiche Bremsdruck anliegt, ist eine Ventil- oder Rückförder-Ansteuerung nicht mehr erforderlich.

Vorzugsweise bleibt auch bei dieser Ansteuerstrategie der Bremskreis 16b der zwei Bremskreise 16a und 16b, welcher der Achse A2 der zwei Achsen A1 und A2 zugeordnet ist, die bei der Generator-Bremskraftverteilung stärker als die Soll-Bremskraftverteilung abgebremst wird, an dem Hauptbremszylinder 14 angebunden, während der andere Bremskreis 16a der zwei Bremskreise 16a und 16b, welcher der anderen Achse A1 der zwei Achsen A1 und A2 des Fahrzeugs zugeordnet ist, die bei der Generator-Bremskraftverteilung weniger als die Soll-Bremskraftverteilung abgebremst wird, mittels seines geschlossenen Umschaltventils 18a von dem Hauptbremszylinder 14 abgekoppelt wird. Damit kann während der kompletten Bremsung bis in den Stillstand eine optimierte Bremskraftverteilung realisiert werden, um eine gewünschte Fahrzeugstabilität und ein möglichst optimales Fahrverhalten zu bewirken.

Außerdem können die mittels der Fig. 2Da und 2Db wiedergegebenen Verfahrensschritte mit einer Steigerung der Verstärkungskraft und/oder einer Reduzierung der Gegenkraft des Bremskraftverstärkers 54 kombiniert werden, um eine Drucksteigerung in den Bremskreisen 16a und 16b zu kompensieren. Der Fahrer hat somit weiterhin das gewohnte Bremsbetätigungsgefühl (Pedalgefühl).

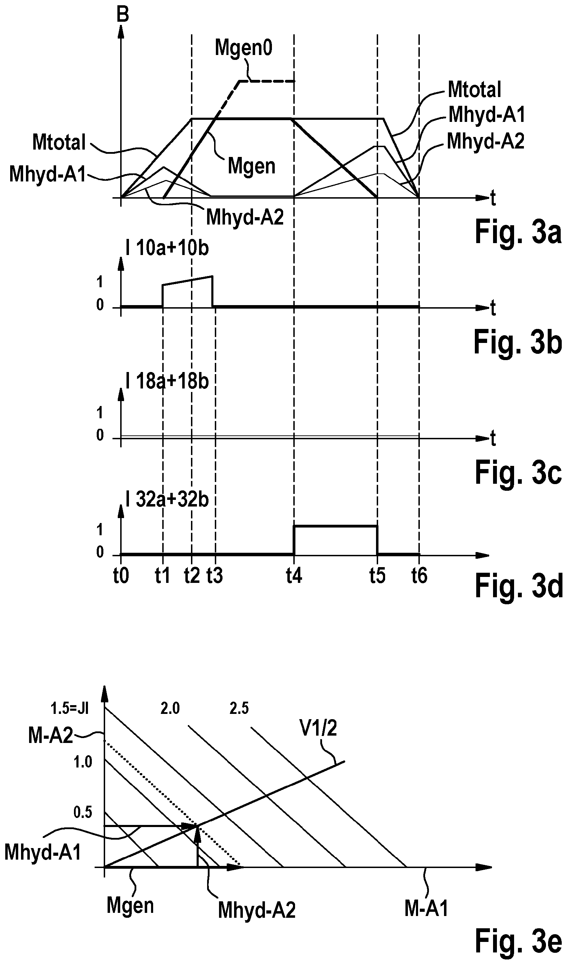

Fig. 3a bis 3e zeigen Koordinatensysteme zum Erläutern einer zweiten Ausführungsform des Verfahrens zum Betreiben eines Bremssystems eines Fahrzeugs.

Das im Weiteren beschriebene Verfahren ist innerhalb des Rahmens der Verfahrensansprüche mit einer Vielzahl von verschiedenen Bremssystemen ausführbar, wobei jedes der Bremssysteme jeweils einen Hauptbremszylinder 14, einen ersten Bremskreis 16a mit einer ersten Speicherkammer 26a, einem ersten Radbremszylinder 10a und einem zweiten Radbremszylinder 12a, und einen zweiten Bremskreis 16b mit einer zweiten Speicherkammer 26b, einem dritten Radbremszylinder 10b und einem vierten Radbremszylinder 12b, hat, und wobei der erste Radbremszylinder 10a über ein stetig stellbares erstes Radauslassventil 22a mit der ersten Speicherkammer 26a, der zweite Radbremszylinder 12a über ein zweites Radauslassventil 24a mit der ersten Speicherkammer 26a, der dritte Radbremszylinder 10b über ein stetig stellbares drittes Radauslassventil 22b mit der zweiten Speicherkammer 26b und der vierte Radbremszylinder 12b über ein viertes Radauslassventil 24b mit der zweiten Speicherkammer 26b hydraulisch verbunden sind.

Die Abszissen der Koordinatensysteme der Fig. 3a bis 3d sind jeweils die Zeitachse t. Eine Ordinate der Koordinatensysteme der Fig. 3a bis 3d gibt ein Bremsmoment B, ein Auslassventil-Stromsignal I10a+10b der stetig stellbaren Radauslassventile 22a und 22b, ein Umschaltventil-Stromsignal I18a+18b von Umschaltventilen 18a und 18b und ein Pumpen-Stromsignal I32a+32b von Pumpen 32a und 32b wieder. Ein insgesamt auf eine erste Achse A1 ausgeübtes erstes Achs-Teilbremsmoment M-A1 ist mittels einer Abszisse des Koordinatensystems der Fig. 3e dargestellt, während eine Ordinate des Koordinatensystems der Fig. 3e ein insgesamt auf eine zweite Achse A2 ausgeübtes zweites Achs-Teilbremsmoment M-A2 wiedergibt. Es wird darauf hingewiesen, dass das hier beschriebene Verfahren sowohl an einem Fahrzeug mit einem Frontantrieb, als auch an einem Fahrzeug mit einem Heckantrieb oder an einem Fahrzeug mit einem Allradantrieb ausführbar ist. Bei allen Fahrzeugtypen ermöglicht das hier beschriebene Verfahren ein bedarfsgerechtes Verblenden in beiden Bremskreisen 16a und 16b.

Bei dem mittels der Fig. 3a bis 3e wiedergegebenen Verfahren betätigt ein Fahrer des Fahrzeugs ab einer Zeit t0 sein Bremsbetätigungselement 42 und schiebt dadurch Bremsflüssigkeit aus dem Hauptbremszylinder 14 seines Bremssystems in die zwei angebundenen Bremskreise 16a und 16b. Da der mindestens eine Generator des Fahrzeugs zur Zeit t0 noch nicht zur Verfügung steht, wird das aus dem Hauptbremszylinder 14 herausgedrückte Bremsflüssigkeitsvolumen in die Radbremszylinder 10a, 10b, 12a und 12b der angebundenen Bremskreise 16a und 16b verschoben und bewirkt damit ein erstes hydraulisches Teilbremsmoments Mhyd-A1 der Radbremszylinder 10a und 10b des ersten Bremskreises 16a und ein zweites hydraulisches Teilbremsmoments Mhyd-A2 der Radbremszylinder 10b und 12b des zweiten Bremskreises 16b. Vorzugsweise ist eine Summe der hydraulischen Teilbremsmomente Mhyd-A1 und Mhyd-A2 gleich einem von dem Fahrer angeforderten Soll-Gesamtbremsmoment Mtotal.

Erst ab einer Zeit t1 ist der mindestens eine Generator des Fahrzeugs zum rekuperativen Bremsen einsetzbar. Trotz der verzögerten Einsetzbarkeit des mindestens einen Generators kann bei dem hier beschriebenen Verfahren jedoch noch kinetische Energie des Fahrzeugs in abspeicherbare elektrische Energie mittels eines rekuperativen Bremsvorgangs umgewandelt werden. Um ein Überschreiten des von dem Fahrer vorgegebenen Soll-Gesamtbremsmoments Mtotal zu verhindern, wird trotz des bereits in den Bremskreisen 16a und 16b vorliegenden signifikanten Drucks Bremsflüssigkeit in die Speicherkammer 26a und 26b verschoben. Dazu werden zumindest das stetig stellbare erste Radauslassventil 22a und das stetig stellbare dritte Radauslassventil 22b ab der Zeit t1 so bestromt, dass der in allen Radbremszylindern 10a, 10b, 12a und 12b vorliegende Bremsdruck bis zu einer Zeit t3 (nahezu) vollständig abgebaut wird. Die stetig stellbaren/regelbaren Radauslassventile 22a und 22b (Druckablassventile) lassen sich auch dann, wenn das Bremssystem bereits unter Druck steht, noch ohne eine unerwünschte Druckerzeugung (stetig/geregelt) öffnen, und ermöglichen damit einen geräuschlosen Druckabbau in den Bremskreisen 16a und 16b. Dadurch ist eine deutliche Rekuperationseffizienzsteigerung im realen Fahrbetrieb möglich, insbesondere bei Antriebssträngen, bei denen der mindestens eine Generator erst deutlich nach Bremsbeginn für einen rekuperativen Bremsvorgang zur Verfügung steht.

Vor dem Öffnen zumindest des ersten Radauslassventils 22a und des dritten Radauslassventils 22b und bei geschlossenem ersten Radauslassventil 22a, geschlossenem zweiten Radauslassventil 24a, geschlossenem dritten Radauslassventil 22b und geschlossenem viertem Radauslassventil 24b kann ermittelt werden, ob es vorteilhafter ist, nur das stetig stellbare erste Radauslassventil 22a und das stetig stellbare dritte Radauslassventil 22b zu öffnen (und das zweite Radauslassventil 24a als Schaltventil und das vierte Radauslassventil 24b als Schaltventil geschlossen zu halten) oder alle Radauslassventile 22a, 22b, 24a und 24b zu öffnen. Dazu wird mindestens ein Druck in zumindest einem Teilvolumen des Bremssystems ermittelt. Sofern der mindestens eine Druck unter mindestens einem vorgegebenen Schwellwert liegt, werden das erste Radauslassventil 22a, das zweite Radauslassventil 24a, das dritte Radauslassventil 22b und das vierte Radauslassventil 24b jeweils/alle in einen zumindest teiloffenen Zustand gesteuert. Sofern der mindestens eine Druck jedoch über dem mindestens einem vorgegebenen Schwellwert liegt, werden nur das erste Radauslassventil 22a und das dritte Radauslassventil 22b jeweils in einen zumindest teiloffenen Zustand gesteuert und das zweite Radauslassventil 24a und das vierte Radauslassventil 24b werden geschlossen gehalten. Der mindestens eine Schwellwert kann so vorgegeben sein, dass selbst ein (gleichzeitiges) Öffnen aller Radauslassventile 22a, 22b, 24a und 24b bei einer Druckbelastung des Bremssystems unter dem mindestens einen Schwellwert kein Geräusch auslöst. Sofern möglich, kann somit schnell viel Bremsflüssigkeit in die Speicherkammern 26a und 26b verschoben werden, während gleichzeitig für alle Verblendsituationen eine Geräuschbelastung für Fahrzeuginsassen unterbunden ist.

Dass der Fahrer ab einer Zeit t2 ein konstantes hohes Soll-Gesamtbremsmoment Mtotal anfordert, hat keinerlei Auswirkungen auf die Verschiebbarkeit des aus dem Hauptbremszylinder 14 herausgedrückten Bremsflüssigkeitsvolumens in die Speicherkammern 26a und 26b. Ab der Zeit t3 kann das vom Fahrer angeforderte Soll-Gesamtbremsmoment zu 100 % als Generator-Bremsmoment Mgen aufgebracht werden. Sofern das Verschieben der aus dem Hauptbremszylinder 14 herausgedrückten Bremsflüssigkeit in die Speicherkammern 26a und 26b der Bremskreise 16a und 16b innerhalb des Jump-in-Bereichs ausgeführt wird, hat dieser Vorgang keine Rückwirkungen auf das Bremsbetätigungselement 42 und der Fahrer spürt somit den Verblendvorgang nicht. Wird das Verblenden jedoch bereits nach einem Überschreiten des Jump-in-Bereichs ausgeführt, so dass ein geschlossener Kraftschluss zwischen dem Bremsbetätigungselement 42 und dem Hauptbremszylinder 14 vorliegt, so kann mittels eines aktiven/elektromechanischen Bremskraftverstärkers 54 des Bremssystems sichergestellt werden, dass der Fahrer dennoch den Verblendvorgang nicht spürt. Dazu kann durch eine Reduzierung einer (die Betätigung des Bremsbetätigungselements 42 durch den Fahrer kraftmäßig unterstützenden) Verstärkungskraft des Bremskraftverstärkers 54 und/oder durch ein Bewirken einer (der Betätigung des Bremsbetätigungselements 42 durch den Fahrer entgegenwirkenden) Gegenkraft des Bremskraftverstärkers 54 das Bremsbetätigungsgefühl (Pedalgefühl) des Fahrers so beeinflusst werden, dass die von ihm zum Verstellen des Bremsbetätigungselements 42 aufzubringende Fahrerbremskraft Ff weiterhin einer standardgemäßen Kennlinie entspricht.

Ab einer Zeit t4 nimmt das maximal ausführbare rekuperative Bremsmoment Mgen0 des mindestens einen Generators ab, da das Fahrzeug aufgrund seiner konstanten Verzögerung keine zum unbegrenzten Einsetzen des mindestens einen Generators ausreichende Geschwindigkeit mehr aufweist. Mittels eines Bremsdruckaufbaus in den Radbremszylindern 10a, 10b, 12a und 12b des Bremssystems kann jedoch auf die zeitliche Abnahme des maximal ausführbaren rekuperativen Bremsmoments Mgen0 reagiert werden. Dazu wird ab der Zeit t4 Bremsflüssigkeit aus den Speicherkammern 26a und 26b mittels der zugeordneten Pumpen 32a und 32b in die Radbremszylinder 10a, 10b, 12a und 12b beider Bremskreise 16a und 16b gepumpt. Wie anhand des Koordinatensystems der Fig. 3c erkennbar ist, erfordert dies keine Ansteuerung der Umschaltventile 18a und 18b des Bremssystems.

Ab einer Zeit t5 liegen das maximal ausführbare rekuperative Bremsmoment Mgen0 und das regenerative Bremsmoment Mgen des mindestens einen Generators bei Null, und das Fahrzeug wird ausschließlich mittels der durch seine Radbremszylinder 10a, 10b, 12a und 12b bewirkten hydraulischen Teilbremsmomente Mhyd-A1 und Mhyd-A2 abgebremst. Eine auf die beiden Achsen A1 und A2 des Fahrzeugs ausgeübte Bremskraftverteilung entspricht somit ab der Zeit t5 wieder der Soll-Bremskraftverteilung V1/2, bis das Fahrzeug zu einer Zeit t6 in den Stillstand gebracht ist.

Die Soll-Bremskraftverteilung V1/2 kann eine am Fahrzeug installierte Soll-Bremskraftverteilung und/oder eine ideale Soll-Bremskraftverteilung sein. Die Soll-Bremskraftverteilung V1/2 kann eine Kraftschlussausnutzung an beiden Achsen oder eine (front- oder hecklastige) Überbremsung einer der beiden Achsen darstellen, um z.B. Einfluss auf eine Fahrdynamik (Agilisierung durch Überbremsung der jeweiligen Achse) zu nehmen.

Alle oben beschriebenen Verfahren können beim Abbremsen/Verlangsamen des Fahrzeugs vorteilhaft zum Umwandeln von kinetischer Energie des Fahrzeugs in elektrische Energie genutzt werden, ohne dass die vom Fahrer gewünschte Soll-Gesamtbremskraft überschritten wird. Es wird ausdrücklich darauf hingewiesen, dass zum Verblenden der Bremswirkung des mindestens einen Generators bei einem Ausführen jedes der hier beschriebenen Verfahren kein "mechanischer Leerweg" benötigt wird. Stattdessen ist ein "elektrischer Leerweg" durch Öffnen zumindest des ersten Radauslassventils 10a und des dritten Radauslassventils 10b realisierbar. Die Verblendbarkeit der Bremswirkung des mindestens einen Generators ist deshalb auch auf keinen Verzögerungsbereich beschränkt.

## Patentansprüche

1. Bremssystem für ein Fahrzeug mit:
einem Hauptbremszylinder (14);
einem an dem Hauptbremszylinder (14) angebundenen ersten Bremskreis (16a) mit einer ersten Speicherkammer (26a), einem ersten Radbremszylinder (10a) und einem zweiten Radbremszylinder (12a), wobei der erste Radbremszylinder (10a) über ein erstes Radauslassventil (22a) mit der ersten Speicherkammer (26a) und der zweite Radbremszylinder (12a) über ein zweites Radauslassventil (24a) mit der ersten Speicherkammer (26a) hydraulisch verbunden sind; und
einem an dem Hauptbremszylinder (14) angebundenen zweiten Bremskreis (16b) mit einer zweiten Speicherkammer (26b), einem dritten Radbremszylinder (10b) und einem vierten Radbremszylinder (12b), wobei der dritte Radbremszylinder (10b) über ein drittes Radauslassventil (22b) mit der zweiten Speicherkammer (26b) und der vierte Radbremszylinder (12b) über ein viertes Radauslassventil (24b) mit der zweiten Speicherkammer (26b) hydraulisch verbunden sind;
wobei das erste Radauslassventil (22a) und das dritte Radauslassventil (22b) jeweils von einem Ventiltyp sind, welcher zusätzlich zu seinem geschlossenen Zustand und einem vollständig offenen Zustand noch in mindestens einen zumindest teiloffenen Zustand steuerbar oder schaltbar ist,
wobei das zweite Radauslassventil (24a) und das vierte Radauslassventil (24b) je ein 2/2-Schaltventil sind;
und wobei das Bremssystem eine Steuervorrichtung (40) umfasst, welche, sofern eine von einem Fahrer des Fahrzeug mittels seiner Betätigung eines an dem Hauptbremszylinder (14) angebundenen Bremsbetätigungselements (42) angeforderte Soll-Gesamtbremskraft zumindest teilweise mittels mindestens eines Generators des Fahrzeugs ausführbar ist, dazu ausgelegt ist, zumindest das erste Radauslassventil (22a) und das dritte Radauslassventil (22b) jeweils in einen zumindest teiloffenen Zustand zu steuern, so dass zumindest ein Teil eines mittels der Betätigung des Bremsbetätigungselements (42) aus dem Hauptbremszylinder (14) in den ersten Bremskreis (16a) verschobenen Bremsflüssigkeitsvolumens in die erste Speicherkammer (26a) und zumindest ein Teil eines mittels der Betätigung des Bremsbetätigungselements (42) aus dem Hauptbremszylinder (14) in den zweiten Bremskreis (16b) verschobenen Bremsflüssigkeitsvolumens in die zweite Speicherkammer (26b) transferierbar sind,
**dadurch gekennzeichnet, dass**
die Steuervorrichtung (40) bei geschlossenem ersten Radauslassventil (22a), geschlossenem zweiten Radauslassventil (24a), geschlossenem dritten Radauslassventil (22b) und geschlossenem viertem Radauslassventil (24b) dazu ausgelegt ist, vor einem Steuern zumindest des ersten Radauslassventils (22a) und des dritten Radauslassventils (22b) jeweils in einen zumindest teiloffenen Zustand mindestens ein Drucksignal bezüglich mindestens eines Drucks in zumindest einem Teilvolumen des Bremssystems mit mindestens einem vorgegebenen Schwellwertsignal zu vergleichen, und, sofern das mindestens eine Drucksignal unter dem mindestens einen Schwellwertsignal liegt, das erste Radauslassventil (22a), das zweite Radauslassventil (24a), das dritte Radauslassventil (22b) und das vierte Radauslassventil (24b) jeweils in einen zumindest teiloffenen Zustand zu steuern, und andernfalls nur das erste Radauslassventil (22a) und das dritte Radauslassventil (22b) jeweils in einen zumindest teiloffenen Zustand zu steuern und das zweite Radauslassventil (24a) und das vierte Radauslassventil (24b) geschlossen zu halten.

2. Bremssystem nach Anspruch 1, wobei die Steuervorrichtung (40) dazu ausgelegt ist, unter Berücksichtigung eines Bremsbetätigungsstärkesignals (46) bezüglich einer Betätigungsstärke der Betätigung des Bremsbetätigungselements (42) durch den Fahrer zu ermitteln, ob die angeforderte Soll-Gesamtbremskraft zumindest teilweise mittels des mindestens einen Generators ausführbar ist, und, gegebenenfalls, den mindestens einen Generator derart anzusteuern, dass die angeforderte Soll-Gesamtbremskraft zumindest teilweise mittels des mindestens einen Generators ausführbar ist.

3. Bremssystem nach Anspruch 1 oder 2, wobei die Steuervorrichtung (40) dazu ausgelegt ist, solange die angeforderte Soll-Gesamtbremskraft unter einer mittels des mindestens einen Generators maximal ausführbaren rekuperativen Bremskraft liegt, zumindest das erste Radauslassventil (22a) und das dritte Radauslassventil (22b) jeweils in einen zumindest teiloffenen Zustand zu steuern und den mindestens einen Generator derart anzusteuern, dass die angeforderte Soll-Gesamtbremskraft mittels des mindestens einen Generators ausgeführt wird, und, sobald die angeforderte Soll-Gesamtbremskraft die maximal ausführbare rekuperative Bremskraft übersteigt, das erste Radauslassventil (22a), das zweite Radauslassventil (24a), das dritte Radauslassventil (22b) und das vierte Radauslassventil (24b) in einen geschlossenen Zustand zu steuern, und, während ein Bremskreis (16b) der zwei Bremskreise (16a, 16b) über sein offenes Umschaltventil (18b) an dem Hauptbremszylinder (14) angebunden bleibt, einen anderen Bremskreis (16a) der zwei Bremskreise (16a, 16b) mittels eines Schließens seines Umschaltventils (18a) von einem Hauptbremszylinderdruck in dem Hauptbremszylinder (14) abzukoppeln, wobei in den Radbremszylindern (10a, 12a) des abgekoppelten Bremskreises (16a) ein Bremsdruck einstellbar oder aufbaubar ist, welcher einer Abweichung einer Summe einer Generator-Bremskraft des mindestens einen Generators und einer hydraulischen Teilbremskraft der Radbremszylinder (10b, 12b) des an dem Hauptbremszylinder (14) angebundenen Bremskreises (16b) von der angeforderten Soll-Gesamtbremskraft entspricht.

4. Bremssystem nach Anspruch 3, wobei eine mittels des mindestens einen Generators auf eine erste Achse (A1) und eine zweite Achse (A2) des Fahrzeugs bewirkte Generator-Bremskraftverteilung von einer vorgegebenen Soll-Bremskraftverteilung abweicht, und wobei, sobald die angeforderte Soll-Gesamtbremskraft die maximal ausführbare rekuperative Bremskraft übersteigt, die Steuervorrichtung (40) dazu ausgelegt ist, während der Bremskreis (16b) der zwei Bremskreise (16a, 16b), welcher einer bei der Generator-Bremskraftverteilung stärker als die Soll-Bremskraftverteilung abgebremsten Achse (A2) der zwei Achsen (A1, A2) zugeordnet ist, mittels seines offenen Umschaltventils (18b) an dem Hauptbremszylinder (14) angebunden bleibt, den anderen Bremskreis (16a) der zwei Bremskreise (16a, 16b), welcher einer bei der Generator-Bremskraftverteilung weniger als die Soll-Bremskraftverteilung abgebremsten anderen Achse (A1) der zwei Achsen (A1, A2) zugeordnet ist, mittels seines geschlossenen Umschaltventils (18a) von dem Hauptbremszylinder (14) abzukoppeln.

5. Bremssystem nach Anspruch 3 oder 4, wobei, sobald die maximal ausführbare rekuperative Bremskraft abnimmt, die Steuervorrichtung (40) dazu ausgelegt ist, Pumpen (32a, 32b) so anzusteuern, dass mittels der Pumpen (32a, 32b) zusätzliches Bremsflüssigkeitsvolumen aus der ersten Speicherkammer (26a) und der zweiten Speicherkammer (26b) förderbar ist, und mittels eines Schließens oder Geschlossenhaltens nur eines Umschaltventils (18a) der Umschaltventile (18a, 18b) den Bremsdruck in den Radbremszylindern (10a, 12a) des abgekoppelten Bremskreises (16a) so einzustellen, dass er einer Abweichung einer Summe der Generator-Bremskraft und der hydraulische Teilbremskraft der Radbremszylinder (10b, 12b) des an dem Hauptbremszylinder (14) angebundenen Bremskreises (16b) von der angeforderten Soll-Gesamtbremskraft entspricht.

6. Verfahren zum Betreiben eines Bremssystems eines Fahrzeugs mit einem Hauptbremszylinder (14), einem an dem Hauptbremszylinder (14) angebundenen ersten Bremskreis (16a) mit einer ersten Speicherkammer (26a), einem ersten Radbremszylinder (10a) und einem zweiten Radbremszylinder (12a), wobei der erste Radbremszylinder (10a) über ein erstes Radauslassventil (22a) mit der ersten Speicherkammer (26a) und der zweite Radbremszylinder (12a) über ein zweites Radauslassventil (24a) mit der ersten Speicherkammer (16a) hydraulisch verbunden sind, und einem an dem Hauptbremszylinder (14) angebundenen zweiten Bremskreis (16b) mit einer zweiten Speicherkammer (26b), einem dritten Radbremszylinder (10b) und einem vierten Radbremszylinder (12b), wobei der dritte Radbremszylinder (10b) über ein drittes Radauslassventil (22b) mit der zweiten Speicherkammer (26b) und der vierte Radbremszylinder (12b) über ein viertes Radauslassventil (24b) mit der zweiten Speicherkammer (26b) hydraulisch verbunden sind, wobei das erste Radauslassventil (22a) und das dritte Radauslassventil (22b) jeweils von einem Ventiltyp sind, welcher zusätzlich zu seinem geschlossenen Zustand und einem vollständig offenen Zustand noch in mindestens einen zumindest teiloffenen Zustand steuerbar oder schaltbar ist, und wobei das zweite Radauslassventil (24a) und das vierte Radauslassventil (24b) je ein 2/2-Schaltventil sind, mit den Schritten:
Ermitteln bei einer Betätigung eines an dem Hauptbremszylinder (14) angebundenen Bremsbetätigungselements (42) durch einen Fahrer des Fahrzeug, ob eine von dem Fahrer mittels der Betätigung des Bremsbetätigungselements (42) angeforderte Soll-Gesamtbremskraft zumindest teilweise mittels mindestens eines Generators des Fahrzeugs ausführbar ist; und
sofern die angeforderte Soll-Gesamtbremskraft zumindest teilweise mittels des mindestens einen Generators ausführbar ist:
- Ansteuern des mindestens einen Generators derart, dass die angeforderte Soll-Gesamtbremskraft zumindest teilweise mittels des mindestens einen Generators ausgeführt wird; und
- Öffnen zumindest des ersten Radauslassventils (22a) zum Transferieren zumindest eines Teils eines mittels der Betätigung des Bremsbetätigungselements (42) aus dem Hauptbremszylinder (14) in den ersten Bremskreis (16a) verschobenen Bremsflüssigkeitsvolumens in die erste Speicherkammer (26a) und Öffnen zumindest des dritten Radauslassventils (22b) zum Transferieren zumindest eines Teils eines mittels der Betätigung des Bremsbetätigungselements (42) aus dem Hauptbremszylinder (14) in den zweiten Bremskreis (16b) verschobenen Bremsflüssigkeitsvolumens in die zweite Speicherkammer (26b);
**gekennzeichnet durch** den Schritt, dass
vor dem Öffnen zumindest des ersten Radauslassventils (22a) und des dritten Radauslassventils (22b) und bei geschlossenem ersten Radauslassventil (22a), geschlossenem zweiten Radauslassventil (24a), geschlossenem dritten Radauslassventil (22b) und geschlossenem viertem Radauslassventil (24b) mindestens ein Druck in zumindest einem Teilvolumen des Bremssystems ermittelt wird, und, sofern der mindestens eine Druck unter mindestens einem vorgegebenen Schwellwert liegt, das erste Radauslassventil (22a), das zweite Radauslassventil (24a), das dritte Radauslassventil (22b) und das vierte Radauslassventil (24b) jeweils in einen zumindest teiloffenen Zustand gesteuert werden, während, sofern der mindestens eine Druck über dem mindestens einem vorgegebenen Schwellwert liegt, nur das erste Radauslassventil (22a) und das dritte Radauslassventil (22b) jeweils in einen zumindest teiloffenen Zustand gesteuert werden und das zweite Radauslassventil (24a) und das vierte Radauslassventil (24b) geschlossen gehalten werden.

7. Verfahren nach Anspruch 6, wobei, solange die angeforderte Soll-Gesamtbremskraft unter einer mittels des mindestens einen Generators maximal ausführbaren rekuperativen Bremskraft liegt, zumindest das erste Radauslassventil (22a) und das dritte Radauslassventil (22b) jeweils in einen zumindest teiloffenen Zustand gesteuert werden und der mindestens eine Generator derart angesteuert wird, dass die angeforderte Soll-Gesamtbremskraft mittels des mindestens einen Generators ausgeführt wird, und, sobald die angeforderte Soll-Gesamtbremskraft die maximal ausführbare rekuperative Bremskraft übersteigt, das erste Radauslassventil (22a), das zweite Radauslassventil (24a), das dritte Radauslassventil (22b) und das vierte Radauslassventil (24b) in einen geschlossenen Zustand gesteuert werden und ein Bremskreis (16b) der zwei Bremskreise (16a, 16b) über sein offenes Umschaltventil (18b) an dem Hauptbremszylinder (14) angebunden bleibt, während ein anderer Bremskreis (16a) der zwei Bremskreise (16a, 16b) mittels eines Schließens seines Umschaltventils (18a) von dem Hauptbremszylinder (14) abgekoppelt wird, wobei in den Radbremszylindern (10a, 12a) des abgekoppelten Bremskreises (16a) ein Bremsdruck eingestellt oder aufgebaut wird, welcher einer Abweichung einer Summe einer Generator-Bremskraft des mindestens einen Generators und einer hydraulischen Teilbremskraft der Radbremszylinder (10b, 12b) des an dem Hauptbremszylinder (14) angebundenen Bremskreises (16b) von der angeforderten Soll-Gesamtbremskraft entspricht.

8. Verfahren nach Anspruch 7, wobei mittels des mindestens einen Generators eine Generator-Bremskraftverteilung auf eine erste Achse (A1) und eine zweite Achse (A2) des Fahrzeugs bewirkt wird, welche von einer vorgegebenen Soll-Bremskraftverteilung abweicht, und wobei, sobald die angeforderte Soll-Gesamtbremskraft die maximal ausführbare rekuperative Bremskraft übersteigt, der Bremskreis (16b) der zwei Bremskreise (16a, 16b), welcher einer Achse (A2) der zwei Achsen (A1, A2) zugeordnet ist, die bei der Generator-Bremskraftverteilung stärker als die Soll-Bremskraftverteilung abgebremst wird, mittels seines offenen Umschaltventils (18b) an dem Hauptbremszylinder (14) angebunden bleibt, während der andere Bremskreis (16a) der zwei Bremskreise (16a, 16b), welcher einer anderen Achse (A1) der zwei Achsen (A1, A2) zugeordnet ist, die bei der Generator-Bremskraftverteilung weniger als die Soll-Bremskraftverteilung abgebremst wird, mittels seines geschlossenen Umschaltventils (18a) von dem Hauptbremszylinder (14) abgekoppelt wird.

9. Verfahren nach Anspruch 7 oder 8, wobei, wenn der Fahrer in das Bremssystem mit dem über sein offenes Umschaltventil (18b) an dem Hauptbremszylinder (14) angebundenen Bremskreis (16b) und dem mittels seines geschlossenen Umschaltventils (18a) von dem Hauptbremszylinder (14) abgekoppelten Bremskreis (16a) nachbremst, der zuvor von dem Hauptbremszylinder (14) abgekoppelte Bremskreis (16a) durch Öffnen seines Umschaltventils (18a) wieder an dem Hauptbremszylinder (14) angebunden wird, und mittels der Radeinlassventile (28b, 30b) des anderen Bremskreises (16b) der Bremsdruck in seinen Radbremszylindern (10b, 12b) so eingestellt wird, dass der Bremsdruck in den mittels der geschlossenen Radeinlassventile (28b, 30b) von dem Hauptbremszylinder (14) abgekoppelten Radbremszylindern (10b, 12b) einer Abweichung einer Summe der Generator-Bremskraft und einer hydraulische Teilbremskraft der an dem Hauptbremszylinder (14) angebundenen Radbremszylinder (10a, 12a) von der angeforderten Soll-Gesamtbremskraft entspricht.

10. Verfahren nach einem der Ansprüche 7 bis 9, wobei, sobald die maximal ausführbare rekuperative Bremskraft abnimmt, Pumpen (32a, 32b) so angesteuert werden, dass die Pumpen (32a, 32b) zusätzliches Bremsflüssigkeitsvolumen aus der ersten Speicherkammer (26a) und der zweiten Speicherkammer (26b) fördern, und mittels eines Schließens oder Geschlossenhaltens nur eines Umschaltventils (18a) der Umschaltventile der Bremsdruck in den Radbremszylindern (10a, 12a) des abgekoppelten Bremskreises (16a) so eingestellt wird, dass er einer Abweichung einer Summe der Generator-Bremskraft und der hydraulische Teilbremskraft der Radbremszylinder (10b, 12b) des an dem Hauptbremszylinder (14) angebundenen Bremskreises (16b) von der angeforderten Soll-Gesamtbremskraft entspricht.

## Claims

1. Brake system for a vehicle, comprising:
a master brake cylinder (14);
a first brake circuit (16a) connected to the master brake cylinder (14) and having a first storage chamber (26a), a first wheel brake cylinder (10a) and a second wheel brake cylinder (12a), wherein the first wheel brake cylinder (10a) is hydraulically connected to the first storage chamber (26a) via a first wheel outlet valve (22a) and the second wheel brake cylinder (12a) is hydraulically connected to the first storage chamber (26a) via a second wheel outlet valve (24a); and
a second brake circuit (16b) connected to the master brake cylinder (14) and having a second storage chamber (26b), a third wheel brake cylinder (10b) and a fourth wheel brake cylinder (12b), wherein the third wheel brake cylinder (10b) is hydraulically connected to the second storage chamber (26b) via a third wheel outlet valve (22b) and the fourth wheel brake cylinder (12b) is hydraulically connected to the second storage chamber (26b) via a fourth wheel outlet valve (24b) ;
wherein the first wheel outlet valve (22a) and the third wheel outlet valve (22b) are each of a type of valve which, in addition to its closed state and a completely open state, can also be controlled or switched into at least one at least partially open state,
wherein the second wheel outlet valve (24a) and the fourth wheel outlet valve (24b) are each a 2/2-way switching valve;
and wherein the brake system comprises a control device (40) which, if a desired overall braking force requested by a driver of the vehicle by the driver actuating a brake actuating element (42) connected to the master brake cylinder (14) can be at least partially carried out by means of at least one generator of the vehicle, is designed to control at least the first wheel outlet valve (22a) and the third wheel outlet valve (22b) in each case into an at least partially open state such that at least some of a brake fluid volume displaced out of the master brake cylinder (14) into the first brake circuit (16a) by means of the actuation of the brake actuating element (42) can be transferred into the first storage chamber (26a) and at least some of the brake fluid volume displaced out of the master brake cylinder (14) into the second brake circuit (16b) by means of the actuation of the brake actuating element (42) can be transferred into the second storage chamber (26b),
**characterized in that**
the control device (40) with first wheel outlet valve (22a) closed, second wheel outlet valve (24a) closed, third wheel outlet valve (22b) closed and fourth wheel outlet valve (24b) closed is designed so as, prior to controlling at least the first wheel outlet valve (22a) and the third wheel outlet valve (22b) in each case into an at least partially open state, to compare at least one pressure signal with respect to at least one pressure in at least one partial volume of the brake system with at least one predetermined threshold value signal and, if the at least one pressure signal lies below the at least one threshold value signal, to control the first wheel outlet valve (22a), the second wheel outlet valve (24a), the third wheel outlet valve (22b) and the fourth wheel outlet valve (24b) in each case into an at least partially open state, and otherwise to control only the first wheel outlet valve (22a) and the third wheel outlet valve (22b) in each case into an at least partially open state and to keep the second wheel outlet valve (24a) and the fourth wheel outlet valve (24b) closed.

2. Brake system according to Claim 1, wherein the control device (40) is designed so as to determine, taking into consideration a brake actuating strength signal (46) with regard to an actuating strength of the actuation of the brake actuating element (42) by the driver, whether the requested desired overall braking force can be at least partially carried out by means of the at least one generator and optionally to activate the at least one generator in such a manner that the requested desired overall braking force can be at least partially carried out by means of the at least one generator.

3. Brake system according to Claim 1 or 2, wherein the control device (40) is designed so as, as long as the requested desired overall braking force lies below a recuperative braking force which can be carried out at maximum by means of the at least one generator, to control at least the first wheel outlet valve (22a) and the third wheel outlet valve (22b) in each case into an at least partially open state and to activate the at least one generator in such a manner that the requested desired overall braking force is carried out by means of the at least one generator, and, as soon as the requested desired overall braking force exceeds the recuperative braking force which can be carried out at maximum, to control the first wheel outlet valve (22a), the second wheel outlet valve (24a), the third wheel outlet valve (22b) and the fourth wheel outlet valve (24b) into a closed state, and, while one brake circuit (16b) of the two brake circuits (16a, 16b) remains connected via its open switch-over valve (18b) to the master brake cylinder (14), to decouple another brake circuit (16a) of the two brake circuits (16a, 16b) by means of closing its switch-over valve (18a) from a master brake cylinder pressure in the master brake cylinder (14), wherein a brake pressure can be set or can be built up in the wheel brake cylinders (10a, 12a) of the decoupled brake circuit (16a), which brake pressure corresponds to a deviation of a sum of a generator braking force of the at least one generator and a hydraulic partial braking force of the wheel brake cylinders (10b, 12b) of the brake circuit (16b) connected to the master brake cylinder (14) from the requested desired overall braking force.

4. Brake system according to Claim 3, wherein a generator braking force distribution brought about on a first axle (A1) and a second axle (A2) of the vehicle by means of the at least one generator deviates from a predetermined desired braking force distribution, and wherein, as soon as the requested desired overall braking force exceeds the recuperative braking force which can be carried out at maximum, the control device (40) is designed so as, while the brake circuit (16b) of the two brake circuits (16a, 16b) that is assigned to one axle (A2) of the two axles (A1, A2) that is braked more heavily than the desired braking force distribution during the generator braking force distribution remains connected by means of its open switch-over valve (18b) to the master brake cylinder (14), to decouple the other brake circuit (16a) of the two brake circuits (16a, 16b) that is assigned to another axle (A1) of the two axles (A1, A2) that is braked less than the desired braking force distribution during the generator braking force distribution, by means of its closed switch-over valve (18a) from the master brake cylinder (14).

5. Brake system according to Claim 3 or 4, wherein, as soon as the recuperative braking force which can be carried out at maximum decreases, the control device (40) is designed to activate pumps (32a, 32b) in such a manner that additional brake fluid volume can be conveyed out of the first storage chamber (26a) and the second storage chamber (26b) by means of the pumps (32a, 32b) and, by means of closing or keeping closed only one switch-over valve (18a) of the switch-over valves (18a, 18b), to set the brake pressure in the wheel brake cylinders (10a, 12a) of the decoupled brake circuit (16a) in such a manner that it corresponds to a deviation of a sum of the generator braking force and of the hydraulic partial braking force of the wheel brake cylinders (10b, 12b) of the brake circuit (16b) connected to the master brake cylinder (14) from the requested desired overall braking force.

6. Method for operating a brake system of a vehicle, comprising a master brake cylinder (14), a first brake circuit (16a) connected to the master brake cylinder (14) and having a first storage chamber (26a), a first wheel brake cylinder (10a) and a second wheel brake cylinder (12a), wherein the first wheel brake cylinder (10a) is hydraulically connected to the first storage chamber (26a) via a first wheel outlet valve (22a) and the second wheel brake cylinder (12a) is hydraulically connected to the first storage chamber (16a) via a second wheel outlet valve (24a), and a second brake circuit (16b) connected to the master brake cylinder (14) and having a second storage chamber (26b), a third wheel brake cylinder (10b) and a fourth wheel brake cylinder (12b), wherein the third wheel brake cylinder (10b) is hydraulically connected to the second storage chamber (26b) via a third wheel outlet valve (22b) and the fourth wheel brake cylinder (12b) is hydraulically connected to the second storage chamber (26b) via a fourth wheel outlet valve (24b), wherein the first wheel outlet valve (22a) and the third wheel outlet valve (22b) are each of a type of valve which, in addition to its closed state and a completely open state, can also be controlled or switched into at least one at least partially open state, and wherein the second wheel outlet valve (24a) and the fourth wheel outlet valve (24b) are each a 2/2-way switching valve, comprising the steps of:
determining upon an actuation of a brake actuating element (42) connected to the master brake cylinder (14) by a driver of the vehicle whether a desired overall braking force requested by the driver by actuating the brake actuating element (42) can be at least partially carried out by means of at least one generator of the vehicle; and
if the requested desired overall braking force can be at least partially carried out by means of the at least one generator:
- activating the at least one generator in such a manner that the requested desired overall braking force is at least partially carried out by means of the at least one generator; and
- opening the at least one first wheel outlet valve (22a) for transferring at least some of a brake fluid volume displaced out of the master brake cylinder (14) into the first brake circuit (16a) by means of the actuation of the brake actuating element (42) into the first storage chamber (26a) and opening at least the third wheel outlet valve (22b) for transferring at least some of a brake fluid volume displaced out of the master brake cylinder (14) into the second brake circuit (16b) by means of the actuation of the brake actuating element (42) into the second storage chamber (26b) ;
**characterized by** the step that
prior to the opening at least of the first wheel outlet valve (22a) and the third wheel outlet valve (22b) and with first wheel outlet valve (22a) closed, second wheel outlet valve (24a) closed, third wheel outlet valve (22b) closed and fourth wheel outlet valve (24b) closed, at least one pressure is determined in at least a partial volume of the brake system, and, if the at least one pressure lies below at least one predetermined threshold value, the first wheel outlet valve (22a), the second wheel outlet valve (24a), the third wheel outlet valve (22b) and the fourth wheel outlet valve (24b) are in each case controlled into an at least partially open state while, if the at least one pressure lies above the at least one predetermined threshold value, only the first wheel outlet valve (22a) and the third wheel outlet valve (22b) are in each case controlled into an at least partially open state and the second wheel outlet valve (24a) and the fourth wheel outlet valve (24b) are kept closed.

7. Method according to Claim 6, wherein, if the requested desired overall braking force lies below a recuperative braking force which can be carried out at maximum by means of the at least one generator, at least the first wheel outlet valve (22a) and the third wheel outlet valve (22b) are in each case controlled into an at least partially open state and the at least one generator is activated in such a manner that the requested desired overall braking force is carried out by means of the at least one generator, and, as soon as the requested desired overall braking force exceeds the recuperative braking force which can be carried out at maximum, the first wheel outlet valve (22a), the second wheel outlet valve (24a), the third wheel outlet valve (22b) and the fourth wheel outlet valve (24b) are controlled into a closed state and one brake circuit (16b) of the two brake circuits (16a, 16b) remains connected via its open switch-over valve (18b) to the master brake cylinder (14) while another brake circuit (16a) of the two brake circuits (16a, 16b) is decoupled by closing its switch-over valve (18a) from the master brake cylinder (14), wherein a brake pressure is set or built up in the wheel brake cylinders (10a, 12a) of the decoupled brake circuit (16a), said brake pressure corresponding to a deviation of a sum of a generator braking force of the at least one generator and a hydraulic partial braking force of the wheel brake cylinders (10b, 12b) of the brake circuit (16b) connected to the master brake cylinder (14) from the requested desired overall braking force.

8. Method according to Claim 7, wherein a generator braking force distribution to a first axle (A1) and a second axle (A2) of the vehicle is brought about by means of the at least one generator, said generator braking force distribution deviating from a predetermined desired braking force distribution, and wherein, as soon as the requested desired overall braking force exceeds the recuperative braking force which can be carried out at maximum, the brake circuit (16b) of the two brake circuits (16a, 16b) that is assigned to one axle (A2) of the two axles (A1, A2) that is braked more heavily during the generator braking force distribution than the desired braking force distribution remains connected by means of its open switch-over valve (18b) to the master brake cylinder (14) while the other brake circuit (16a) of the two brake circuits (16a, 16b) that is assigned to another axle (A1) of the two axles (A1, A2) that is braked less during the generator braking force distribution than the desired braking force distribution is decoupled by means of its closed switch-over valve (18a) from the master brake cylinder (14) .

9. Method according to Claim 7 or 8, wherein, if the driver carries out a subsequent braking action in the brake system with the brake circuit (16b) connected via its open switch-over valve (18b) to the master brake cylinder (14) and the brake circuit (16a) decoupled by means of its closed switch-over valve (18a) from the master brake cylinder (14), the brake circuit (16a) which was previously decoupled from the master brake cylinder (14) is again connected by opening its switch-over valve (18a) to the master brake cylinder (14), and, by means of the wheel inlet valves (28b, 30b) of the other brake circuit (16b), the brake pressure in its wheel brake cylinders (10b, 12b) is set in such a manner that the brake pressure in the wheel brake cylinders (10b, 12b) decoupled from the master brake cylinder (14) by means of the closed wheel inlet valves (28b, 30b) corresponds to a deviation of a sum of the generator braking force and a hydraulic partial braking force of the wheel brake cylinders (10a, 12a) connected to the master brake cylinder (14) from the requested desired overall braking force.

10. Method according to one of Claims 7 to 9, wherein, if the recuperative braking force which can be carried out at maximum decreases, pumps (32a, 32b) are activated in such a manner that the pumps (32a, 32b) convey additional brake fluid volume out of the first storage chamber (26a) and the second storage chamber (26b) and, by means of closing or keeping closed just one switch-over valve (18a) of the switch-over valves, the brake pressure in the wheel brake cylinders (10a, 12a) of the decoupled brake circuit (16a) is set in such a manner that it corresponds to a deviation of a sum of the generator braking force and the hydraulic partial braking force of the wheel brake cylinders (10b, 12b) of the brake circuit (16b) connected to the master brake cylinder (14) from the requested desired overall braking force.

## Revendications

1. Système de freinage pour un véhicule, comprenant :
un maître-cylindre de frein (14) ;
un premier circuit de freinage (16a) raccordé au maître-cylindre de frein (14) et doté d'une première chambre d'accumulation (26a), d'un premier cylindre de frein de roue (10a) et d'un deuxième cylindre de frein de roue (12a), le premier cylindre de frein de roue (10a) étant relié hydrauliquement à la première chambre d'accumulation (26a) par le biais d'une première soupape de sortie de roue (22a) et le deuxième cylindre de frein de roue (12a) étant relié hydrauliquement à la première chambre d'accumulation (26a) par le biais d'une deuxième soupape de sortie de roue (24a) ; et
un deuxième circuit de freinage (16b) raccordé au maître-cylindre de frein (14) et doté d'une deuxième chambre d'accumulation (26b), d'un troisième cylindre de frein de roue (10b) et d'un quatrième cylindre de frein de roue (12b), le troisième cylindre de frein de roue (10b) étant relié hydrauliquement à la deuxième chambre d'accumulation (26b) par le biais d'une troisième soupape de sortie de roue (22b) et le quatrième cylindre de frein de roue (12b) étant relié hydrauliquement à la deuxième chambre d'accumulation (26b) par le biais d'une quatrième soupape de sortie de roue (24b) ;
la première soupape de sortie de roue (22a) et la troisième soupape de sortie de roue (22b) étant respectivement d'un type qui, en plus de son état fermé et d'un état complètement ouvert, peut encore être commandé ou commuté dans au moins un état au moins partiellement ouvert,
la deuxième soupape de sortie de roue (24a) et la quatrième soupape de sortie de roue (24b) étant chacune une soupape de commutation à 2/2 voies ;
et le système de freinage comportant un dispositif de commande (40), lequel est conçu pour, si une force de freinage totale de consigne demandée par un conducteur du véhicule par le biais de son actionnement d'un élément d'actionnement de frein (42) raccordé au maître-cylindre de frein (14) peut être réalisée au moins partiellement au moyen d'au moins un générateur du véhicule, commander au moins la première soupape de sortie de roue (22a) et la troisième soupape de sortie de roue (22b) respectivement dans un état au moins partiellement ouvert, de telle sorte qu'au moins une partie d'un volume de liquide de frein déplacé à partir du maître-cylindre de frein (14) dans le premier circuit de freinage (16a) par le biais de l'actionnement de l'élément d'actionnement de frein (42) peut être transférée dans la première chambre d'accumulation (26a) et qu'au moins une partie d'un volume de liquide de frein déplacé à partir du maître-cylindre de frein (14) dans le deuxième circuit de freinage (16b) par le biais de l'actionnement de l'élément d'actionnement de frein (42) peut être transférée dans la deuxième chambre d'accumulation (26b),
**caractérisé en ce que**
le dispositif de commande (40) est conçu pour, lorsque la première soupape de sortie de roue (22a) est fermée, la deuxième soupape de sortie de roue (24a) est fermée, la troisième soupape de sortie de roue (22b) est fermée et la quatrième soupape de sortie de roue (24b) est fermée, comparer au moins un signal de pression se rapportant à au moins une pression dans au moins un volume partiel du système de freinage avec au moins un signal de valeur seuil prédéfini, avant une commande d'au moins la première soupape de sortie de roue (22a) et de la troisième soupape de sortie de roue (22b) respectivement dans un état au moins partiellement ouvert et, si l'au moins un signal de pression est inférieur à l'au moins un signal de valeur seuil, pour commander la première soupape de sortie de roue (22a), la deuxième soupape de sortie de roue (24a), la troisième soupape de sortie de roue (22b) et la quatrième soupape de sortie de roue (24b) respectivement dans un état au moins partiellement ouvert, et, autrement, pour ne commander que la première soupape de sortie de roue (22a) et la troisième soupape de sortie de roue (22b) respectivement dans un état au moins partiellement fermé et pour maintenir fermée la deuxième soupape de sortie de roue (24a) et la quatrième soupape de sortie de roue (24b).

2. Système de freinage selon la revendication 1, dans lequel le dispositif de commande (40) est conçu pour, en tenant compte d'un signal d'intensité d'actionnement de frein (46) se rapportant à une intensité d'actionnement de l'élément d'actionnement de frein (42) par le conducteur, déterminer si la force de freinage totale de consigne demandée peut être réalisée au moins partiellement au moyen de l'au moins un générateur, et, éventuellement, pour commander l'au moins un générateur de telle sorte que la force de freinage totale de consigne demandée puisse être réalisée au moins partiellement au moyen de l'au moins un générateur.

3. Système de freinage selon la revendication 1 ou 2, dans lequel le dispositif de commande (40) est conçu pour, tant que la force de freinage totale de consigne demandée est inférieure à une force de freinage récupérative maximale pouvant être réalisée au moyen de l'au moins un générateur, commander au moins la première soupape de sortie de roue (22a) et la troisième soupape de sortie de roue (22b) respectivement dans un état au moins partiellement ouvert et pour commander l'au moins un générateur de telle sorte que la force de freinage totale de consigne demandée soit réalisée au moyen de l'au moins un générateur, et, dès que la force de freinage totale de consigne demandée dépasse la force de freinage récupérative maximale pouvant être réalisée, commander la première soupape de sortie de roue (22a), la deuxième soupape de sortie de roue (24a), la troisième soupape de sortie de roue (22b) et la quatrième soupape de sortie de roue (24b) dans un état fermé, et pour, tandis qu'un circuit de freinage (16b) des deux circuits de freinage (16a, 16b) demeure raccordé au maître-cylindre de frein (14) par le biais de sa soupape d'inversion ouverte (18b), désaccoupler un autre circuit de freinage (16a) des deux circuits de freinage (16a, 16b) d'une pression dans le maître-cylindre de frein (14) par une fermeture de sa soupape d'inversion (18a), dans lequel une pression de freinage peut être réglée ou établie dans les cylindres de frein de roue (10a, 12a) du circuit de freinage désaccouplé (16a), laquelle pression de freinage correspond à une déviation d'une somme d'une force de freinage de l'au moins un générateur et d'une force de freinage partielle hydraulique des cylindres de frein de roue (10b, 12b) du circuit de freinage (16b) raccordé au maître-cylindre de frein (14) par rapport à la force de freinage totale de consigne demandée.

4. Système de freinage selon la revendication 3, dans lequel une répartition de force de freinage de générateur produite au moyen de l'au moins un générateur sur un premier essieu (A1) et un deuxième essieu (A2) du véhicule diffère d'une répartition de force de freinage de consigne prédéfinie, et dans lequel, dès que la force de freinage totale de consigne demandée dépasse la force de freinage récupérative maximale pouvant être réalisée, le dispositif de commande (40) est conçu pour, tandis que le circuit de freinage (16b) des deux circuits de freinage (16a, 16b), lequel est associé à un essieu (A2) des deux essieux (A1, A2) freiné plus fortement que la répartition de force de freinage de consigne lors de la répartition de force de freinage de générateur, demeure raccordé au maître-cylindre de frein (14) au moyen de sa soupape d'inversion ouverte (18b), désaccoupler l'autre circuit de freinage (16a) des deux circuits de freinage (16a, 16b), lequel est associé à un autre essieu (A1) des deux essieux (A1, A2) freiné moins fortement que la répartition de force de freinage de consigne lors de la répartition de force de freinage de générateur, du maître-cylindre de frein (14) au moyen de sa soupape d'inversion fermée (18a).

5. Système de freinage selon la revendication 3 ou 4, dans lequel, dès que la force de freinage récupérative maximale pouvant être réalisée diminue, le dispositif de commande (40) est conçu pour commander des pompes (32a, 32b) de telle sorte qu'au moyen des pompes (32a, 32b) un volume de liquide de frein supplémentaire peut être refoulé hors de la première chambre d'accumulation (26a) et de la deuxième chambre d'accumulation (26b), et pour, grâce à une fermeture ou un maintien à l'état fermé de seulement une soupape d'inversion (18a) des soupapes d'inversion (18a, 18b), régler la pression de freinage dans les cylindres de frein de roue (10a, 12a) du circuit de freinage désaccouplé (16a) de telle sorte qu'elle corresponde à une déviation d'une somme de la force de freinage de générateur et de la force de freinage partielle hydraulique des cylindres de frein de roue (10b, 12b) du circuit de freinage (16b) raccordé au maître-cylindre de frein (14) par rapport à la force de freinage totale de consigne demandée.

6. Procédé de fonctionnement d'un système de freinage d'un véhicule comportant un maître-cylindre de frein (14), un premier circuit de freinage (16a) raccordé au maître-cylindre de frein (14) et doté d'une première chambre d'accumulation (26a), d'un premier cylindre de frein de roue (10a) et d'un deuxième cylindre de frein de roue (12a), le premier cylindre de frein de roue (10a) étant relié hydrauliquement à la première chambre d'accumulation (26a) par le biais d'une première soupape de sortie de roue (22a) et le deuxième cylindre de frein de roue (12a) étant relié hydrauliquement à la première chambre d'accumulation (16a) par le biais d'une deuxième soupape de sortie de roue (24a), et un deuxième circuit de freinage (16b) raccordé au maître-cylindre de frein (14) et doté d'une deuxième chambre d'accumulation (26b), d'un troisième cylindre de frein de roue (10b) et d'un quatrième cylindre de frein de roue (12b), le troisième cylindre de frein de roue (10b) étant relié hydrauliquement à la deuxième chambre d'accumulation (26b) par le biais d'une troisième soupape de sortie de roue (22b) et le quatrième cylindre de frein de roue (12b) étant relié hydrauliquement à la deuxième chambre d'accumulation (26b) par le biais d'une quatrième soupape de sortie de roue (24b), la première soupape de sortie de roue (22a) et la troisième soupape de sortie de roue (22b) étant respectivement d'un type qui, en plus de son état fermé et d'un état complètement ouvert, peut encore être commandé ou commuté dans au moins un état au moins partiellement ouvert, et la deuxième soupape de sortie de roue (24a) et la quatrième soupape de sortie de roue (24b) étant chacune une soupape de commutation à 2/2 voies, comprenant les étapes :
déterminer, lors d'un actionnement d'un élément d'actionnement de frein (42) raccordé au maître-cylindre de frein (14) par un conducteur du véhicule, si une force de freinage totale de consigne demandée par le conducteur par le biais de l'actionnement de l'élément d'actionnement de frein (42) peut être réalisée au moins partiellement au moyen d'au moins un générateur du véhicule ; et
si la force de freinage totale de consigne demandée peut être réalisée au moins partiellement au moyen de l'au moins un générateur :
- commander l'au moins un générateur de telle sorte que la force de freinage totale de consigne demandée soit réalisée au moins partiellement au moyen de l'au moins un générateur ; et
- ouvrir au moins la première soupape de sortie de roue (22a) pour transférer dans la première chambre d'accumulation (26a) moins une partie d'un volume de liquide de frein déplacé à partir du maître-cylindre de frein (14) dans le premier circuit de freinage (16a) par le biais de l'actionnement de l'élément d'actionnement de frein (42) et ouvrir au moins la troisième soupape de sortie de roue (22b) pour transférer dans la deuxième chambre d'accumulation (26b) au moins une partie d'un volume de liquide de frein déplacé à partir du maître-cylindre de frein (14) dans le deuxième circuit de freinage (16b) par le biais de l'actionnement de l'élément d'actionnement de frein (42),
**caractérisé par** l'étape telle que
avant l'ouverture d'au moins la première soupape de sortie de roue (22a) et de la troisième soupape de sortie de roue (22b) et lorsque la première soupape de sortie de roue (22a) est fermée, la deuxième soupape de sortie de roue (24a) est fermée, la troisième soupape de sortie de roue (22b) est fermée et la quatrième soupape de sortie de roue (24b) est fermée, au moins une pression dans au moins un volume partiel du système de freinage est déterminée et, si l'au moins une pression est inférieure à au moins une valeur seuil prédéfinie, la première soupape de sortie de roue (22a), la deuxième soupape de sortie de roue (24a), la troisième soupape de sortie de roue (22b) et la quatrième soupape de sortie de roue (24b) sont commandées respectivement dans un état au moins partiellement ouvert, tandis que, si l'au moins une pression est supérieure à l'au moins une valeur seuil prédéfinie, seulement la première soupape de sortie de roue (22a) et la troisième soupape de sortie de roue (22b) sont commandées respectivement dans un état au moins partiellement fermé et la deuxième soupape de sortie de roue (24a) et la quatrième soupape de sortie de roue (24b) sont maintenues fermées.

7. Procédé selon la revendication 6, dans lequel, tant que la force de freinage totale de consigne demandée est inférieure à une force de freinage récupérative maximale pouvant être réalisée au moyen de l'au moins un générateur, au moins la première soupape de sortie de roue (22a) et la troisième soupape de sortie de roue (22b) sont commandées respectivement dans un état au moins partiellement ouvert et l'au moins un générateur est commandé de telle sorte que la force de freinage totale de consigne demandée soit réalisée au moyen de l'au moins un générateur, et, dès que la force de freinage totale de consigne demandée dépasse la force de freinage récupérative maximale pouvant être réalisée, la première soupape de sortie de roue (22a), la deuxième soupape de sortie de roue (24a), la troisième soupape de sortie de roue (22b) et la quatrième soupape de sortie de roue (24b) sont commandées dans un état fermé, et un circuit de freinage (16b) des deux circuits de freinage (16a, 16b) demeure raccordé au maître-cylindre de frein (14) par le biais de sa soupape d'inversion ouverte (18b), tandis qu'un autre circuit de freinage (16a) des deux circuits de freinage (16a, 16b) est désaccouplé du maître-cylindre de frein (14) par une fermeture de sa soupape d'inversion (18a), dans lequel une pression de freinage est réglée ou établie dans les cylindres de frein de roue (10a, 12a) du circuit de freinage désaccouplé (16a), laquelle pression de freinage correspond à une déviation d'une somme d'une force de freinage de l'au moins un générateur et d'une force de freinage partielle hydraulique des cylindres de frein de roue (10b, 12b) du circuit de freinage (16b) raccordé au maître-cylindre de frein (14) par rapport à la force de freinage totale de consigne demandée.

8. Procédé selon la revendication 7, dans lequel, au moyen de l'au moins un générateur, une répartition de force de freinage de générateur est produite sur un premier essieu (A1) et un deuxième essieu (A2) du véhicule, laquelle diffère d'une répartition de force de freinage de consigne prédéfinie, et dans lequel, dès que la force de freinage totale de consigne demandée dépasse la force de freinage récupérative maximale pouvant être réalisée, le circuit de freinage (16b) des deux circuits de freinage (16a, 16b), lequel est associé à un essieu (A2) des deux essieux (A1, A2) qui est freiné plus fortement que la répartition de force de freinage de consigne lors de la répartition de force de freinage de générateur, demeure raccordé au maître-cylindre de frein (14) au moyen de sa soupape d'inversion ouverte (18b), tandis que l'autre circuit de freinage (16a) des deux circuits de freinage (16a, 16b), lequel est associé à un autre essieu (A1) des deux essieux (A1, A2) qui est freiné moins fortement que la répartition de force de freinage de consigne lors de la répartition de force de freinage de générateur, est désaccouplé du maître-cylindre de frein (14) au moyen de sa soupape d'inversion fermée (18a) .

9. Procédé selon la revendication 7 ou 8, dans lequel, lorsque le conducteur freine ultérieurement dans le système de freinage avec le circuit de freinage (16b) raccordé au maître-cylindre de frein (14) par le biais de sa soupape d'inversion ouverte (18b) et le circuit de freinage (16a) désaccouplé du maître-cylindre de frein (14) au moyen de sa soupape d'inversion fermée (18a), le circuit de freinage (16a) désaccouplé préalablement du maître-cylindre de frein (14) est à nouveau raccordé au maître-cylindre de frein (14) par ouverture de sa soupape d'inversion (18a), et au moyen des soupapes d'entrée de roue (28b, 30b) de l'autre circuit de freinage (16b), la pression de freinage dans ses cylindres de frein de roue (10b, 12b) est réglée de telle sorte que la pression de freinage dans les cylindres de frein de roue (10b, 12b) désaccouplés du maître-cylindre de frein (14) au moyen des soupapes d'entrée de roue fermées (28b, 30b) corresponde à une déviation d'une somme de la force de freinage de générateur et d'une force de freinage partielle hydraulique des cylindres de frein de roue (10a, 12a) raccordés au maître-cylindre de frein (14) par rapport à la force de freinage totale de consigne demandée.

10. Procédé selon l'une des revendications 7 à 9, dans lequel, dès que la force de freinage récupérative maximale pouvant être réalisée diminue, des pompes (32a, 32b) sont commandées de telle sorte que les pompes (32a, 32b) refoulent un volume de liquide de frein supplémentaire hors de la première chambre d'accumulation (26a) et de la deuxième chambre d'accumulation (26b), et, grâce à une fermeture ou un maintien à l'état fermé de seulement une soupape d'inversion (18a) des soupapes d'inversion, la pression de freinage dans les cylindres de frein de roue (10a, 12a) du circuit de freinage désaccouplé (16a) est réglée de telle sorte qu'elle corresponde à une déviation d'une somme de la force de freinage de générateur et de la force de freinage partielle hydraulique des cylindres de frein de roue (10b, 12b) du circuit de freinage (16b) raccordé au maître-cylindre de frein (14) par rapport à la force de freinage totale de consigne demandée.
